# EUROPÄISCHE PATENTSCHRIFT

(11) **EP 1 322 961 B1**
(45) Veröffentlichungstag und Bekanntmachung des Hinweises auf die Patenterteilung: **15.09.2004**
(21) Anmeldenummer: 01969126.0
(22) Anmeldetag: 04.10.2001
(51) Int. Cl.: G01N 35/00, B25J 15/04, B25J 9/02

(54) **VORRICHTUNG MIT EINEM WERKZEUGHALTER UND EINEM ABNEHMBAR BEFESTIGBAREN WERKZEUG**
DEVICE COMPRISING A TOOL HOLDER AND A REMOVABLY ATTACHABLE TOOL
DISPOSITIF COMPRENANT UN PORTE-OUTILS ET UN OUTIL A FIXATION AMOVIBLE

(30) Priorität: 06.10.2000 CH 197900
(43) Veröffentlichungstag der Anmeldung: 02.07.2003
(73) Patentinhaber: Chemspeed Ltd., 4302 Augst (CH)
(72) Erfinder: GÜLLER, Rolf, CH-5027 Herznach (CH); SCHRÖER, Josef, CH-4132 Muttenz (CH); FRANK, Paul, CH-6373 Ennetbürgen (CH); METZGER, Franz, CH-4055 Basel (CH); BACHMANN, Christoph, CH-4415 Lausen (CH); KLOKOW, Gerhard, 79618 Rheinfelden (DE); EICHIN, Stefan, 79669 Zell i.W. (DE)
(74) Vertreter: Bollhalder, Renato
(86) Internationale Anmeldenummer: PCT/CH2001/000598
(87) Internationale Veröffentlichungsnummer: WO 2002/029419

(56) Entgegenhaltungen:
- WO-A-00/08472
- DE-A- 3 801 218
- DE-C- 19 851 501
- FR-A- 2 310 710
- FR-A- 2 749 662
- US-A- 5 532 942
- US-A- 5 599 500
- US-A- 5 756 304
- US-A- 5 873 394

## Beschreibung

Die vorliegende Erfindung bezieht sich auf eine Vorrichtung mit einem Werkzeughalter, der in einer x-Richtung und einer dazu senkrechten z-Richtung verstellbar ist, und einem am Werkzeughalter abnehmbar befestigbaren ersten Werkzeug in Form eines Dosierkopfs.

Derartige Vorrichtungen werden unter anderem zur automatischen Zudosierung von Substanzen in eine Mehrzahl von Reaktionsgefässe oder Reagenzgläser, die z.B. nebeneinander angeordnet sind, verwendet.

Bei einer unter der Bezeichnung Caco-2 Assay bekannten Vorrichtung der Firma Mettler Toledo Bohdan, Greifensee, Schweiz, sind zwei Werkzeughalter mit unterschiedlichen Werkzeugen vorhanden. Die Werkzeughalter sind in einer horizontalen x-Richtung, einer dazu senkrechten, horizontalen y-Richtung und einer dazu senkrechten, vertikalen z-Richtung verstellbar und können so softwaregesteuert nebeneinander angeordnete Reaktionsgefässe bedienen. Eines der Werkzeuge ist zur Zudosierung von Flüssigkeit als Dosierkopf in Form eines Viernadelkopfs mit vier parallelen Hohlnadeln, die auseinanderspreizbar sind, ausgebildet. Das andere Werkzeug ist ein Greifer zum Handhaben von Substanzplatten mit einer Vielzahl von Ausnehmungen zur Substanzaufnahme. Für das Wägen von von der Vorrichtung Handhabbarem ist eine Waage vorgesehen, auf die z.B. eine entsprechende Substanzplatte oder ein Reagenzglas gestellt wird.

Die beiden fix installierten Werkzeuge ermöglichen zwar das Handling von Flüssigkeiten und Festkörpern, beispielsweise aber nicht das Zudosieren eines Feststoffs direkt in ein Reaktionsgefäss. Ausserdem sind zwei Werkzeughalter vorhanden, die unabhängig voneinander verstellbar sein müssen, wobei darauf geachtet werden muss, dass sie sich nicht in die Quere kommen. Schliesslich ist das genaue Abwägen einer bestimmten Substanzmenge relativ aufwendig.

Eine ähnliche Vorrichtung ist aus der Schrift US5756 304 bekannt.

Angesichts der Nachteile der oben beschriebenen Vorrichtung des Standes der Technik liegt der Erfindung die Aufgabe zugrunde, eine Vorrichtung zu schaffen, mit der Substanzen in den unterschiedlichsten Formen möglichst einfach gehandhabt werden können.

Diese Aufgabe wird durch die erfindungsgemässe Vorrichtung gelöst, wie sie im unabhängigen Patentanspruch 1 definiert ist. Bevorzugte Ausführungsvarianten ergeben sich aus den abhängigen Patentansprüchen.

Das Wesen der Erfindung besteht im Folgenden: Eine Vorrichtung umfasst einen Werkzeughalter, der in einer x-Richtung und einer dazu senkrechten z-Richtung verstellbar ist, und ein am Werkzeughalter abnehmbar befestigbares erstes Werkzeug in Form eines Dosierkopfs. Sie umfasst mindestens ein weiteres, anderes Werkzeug, das alternativ zum ersten Werkzeug am Werkzeughalter abnehmbar befestigbar ist und das mindestens ein unabhängig von der Bewegung des Werkzeughalters aktiv bewegbares Teil aufweist, wobei das Befestigen und Abnehmen jeweils eines der Werkzeuge automatisch durchführbar ist.

Unter automatischem Befestigen und Abnehmen eines Werkzeugs wird hier verstanden, dass das Befestigen und Abnehmen nicht von Hand erfolgt, sondern durch die Vorrichtung selbst durchgeführt wird, allenfalls gesteuert durch eine Bedienperson.

Dadurch, dass die Vorrichtung verschiedene Werkzeuge mit unterschiedlichen Funktionen umfasst, die auf automatische Weise alternativ am Werkzeughalter befestigbar und wieder abnehmbar sind, können problemlos verschiedenste Substanzen, Festkörper, etc. gehandhabt werden. Da am Werkzeughalter jeweils nur ein Werkzeug angebracht ist, besteht nicht die Gefahr, dass sich verschiedene Werkzeughalter und Werkzeuge gegenseitig behindern.

Dadurch, dass das weitere Werkzeug mindestens ein unabhängig von der Bewegung des Werkzeughalters aktiv bewegbares Teil aufweist, ergeben sich bessere und zusätzliche Einsatzmöglichkeiten im Vergleich zu einem mechanisch passiven Werkzeug bzw. einem Werkzeug, das nur abhängig vom Werkzeughalter bewegbar ist.

Bei einem vorteilhaften Ausführungsbeispiel führt der Dosierkopf einen Vorratsbehälter mit der zu dosierenden Substanz vollständig mit sich mit. Dadurch entfallen Substanzzuführschläuche etc. zum Dosierkopf oder zum Werkzeughalter. Dies hat zusätzlich den Vorteil, dass der Dosierkopf freier bewegbar ist, ohne von Schläuchen etc. behindert zu werden.

Bei einem bevorzugten Ausführungsbeispiel ist der Werkzeughalter um die z-Richtung drehbar. Dies ermöglicht insbesondere das Drehen eines Werkzeugs um z.B. 90°, d.h. dass beispielsweise mittels eines Mehrnadelkopfs mit mehreren nebeneinander angeordneten Hohlnadeln Gefässen einer Matrize reihenweise Substanzen zudosierbar sind, die je nach Hohlnadel unterschiedlich sein können, der Mehrnadelkopf anschliessend um 90° gedreht und den Gefässen der Matrize kolonnenweise Substanzen zudosierbar sind, die wiederum je nach Hohlnadel unterschiedlich sein können. So kann auf einfache Weise jedem Gefäss der Matrize eine andere Kombination von Substanzen zudosiert werden. Ausserdem ermöglicht das Drehen das Anordnen von Reaktionsgefässen, Eduktfläschchen etc. auf einer Fläche und nicht nur auf einer Geraden.

Vorzugsweise ist der Werkzeughalter zusätzlich in einer zu der x-Richtung und der z-Richtung senkrechten y-Richtung verstellbar. Dies ermöglicht das Anordnen von Reaktionsgefässen, Eduktfläschchen etc. auf einer grösseren Fläche.

Bei einer vorteilhaften Ausführungsvariante erfolgt die Befestigung der Werkzeuge am Werkzeughalter mittels Magneten, wobei vorzugsweise von zwei sich gegenseitig anziehenden Permanentmagneten der eine am Werkzeughalter und der andere am Werkzeug angeordnet ist und die Wirkung der gegenseitigen Anziehung der beiden Permanentmagnete mittels mindestens eines Elektromagnets aufhebbar ist. Die Verbindung von Werkzeug und Werkzeughalter mittels Magneten ermöglicht ein automatisches Befestigen des Werkzeugs am Werkzeughalter, indem beispielsweise der Werkzeughalter über das Werkzeug geführt und dann auf dieses abgesenkt wird oder der Werkzeughalter seitlich an das Werkzeug gefahren wird. Auch das Lösen des Werkzeugs vom Werkzeughalter durch Aktivieren des mindestens einen Elektromagnets mittels Stromimpulsen trägt dazu bei, dass das Auswechseln von Werkzeugen automatisch erfolgen kann.

Bei alternativen vorteilhaften Ausführungsvarianten erfolgt die Befestigung der Werkzeuge am Werkzeughalter durch Verschrauben, mittels eines Bajonettverschlusses oder mittels einer Klemmverbindung etc. Diese Befestigungsarten sind zwar im Normalfall aufwendiger zu realisieren, aber relativ einfach zu automatisieren, insbesondere wenn der Werkzeughalter um die z-Richtung drehbar ist.

Vorzugsweise ist eines der Werkzeuge ein Schneckendosierkopf, der eine in einem an seinem unteren Ende offenen Rohr um die z-Richtung vorwärts und rückwärts drehbare Schnecke umfasst, mit der Substanz aufnehmbar und abgebbar ist. Mit einem derartigen Schneckendosierkopf kann pulverförmige oder flüssige Substanz einem Vorratsbehälter gezielt entnommen und auch wieder gezielt abgegeben werden.

Mit Vorteil ist das untere offene Ende des Rohres mit einer mit Löchern versehenen Blende verschliessbar und im Rohr ein auf der Schnecke laufender Stempel angeordnet, der beim Abgeben von Substanz bei sich drehender Schnecke Substanz durch die Blende drückt. Das Einsetzen einer Blende führt zu einer gleichmässigeren Abgabe von Substanz, da die Substanz gleichmässig durch die Löcher der Blende gedrückt wird. Dies hat wiederum den Vorteil, dass genauer dosiert werden kann.

Vorteilhafterweise ist eines der Werkzeuge ein Kapseltransportkopf, mit welchem eine Kapsel, vorzugsweise durch Ansaugen, aufnehmbar und abgebbar ist. Ein derartiges Werkzeug ermöglicht das Transportieren von Substanzen in Kapseln oder ähnlichen Behältern.

Bevorzugt ist eines der Werkzeuge ein Matrizenkapseltransportkopf, mit welchem matrizenartig angeordnete Kapseln, vorzugsweise durch Ansaugen, aufnehmbar und die Kapseln einzeln, gemeinsam oder gruppenweise abgebbar sind. Auch der Matrizenkapseltransportkopf ermöglicht das Transportieren von Substanzen in Kapseln, wobei eine Vielzahl von matrizenartig angeordneten Kapseln gleichzeitig gehandhabt werden können.

Mit Vorteil ist eines der Werkzeuge ein Kapselhandlingkopf, mit welchem mindestens eine Kapsel aufnehmbar ist, die in ihm, vorzugsweise mit einer Hohlnadel, öffenbar ist und in welchem vorzugsweise der Inhalt der Kapsel mit einer anderen Substanz, insbesondere einem Lösungsmittel, mischbar ist. Das Mischen kann beispielsweise durch Zugeben von Lösungsmittel in die Kapsel, Aufsaugen von Substanz und Lösungsmittel aus der Kapsel und wieder Zugeben des Aufgesaugten in die Kapsel erfolgen. Alternativ kann mit der Hohlnadel auch Substanz aus der Kapsel gesogen und an einem anderen Ort wieder abgegeben werden. Mit dem erfindungsgemässen Kapselhandlingkopf können chemische Reaktionen ausserhalb eines Reaktionsgefässes noch besser vorbereitet werden.

Bei einer bevorzugten Ausführungsvariante ist eines der Werkzeuge ein Matrizenkapselhandlingkopf, mit welchem mehrere matrizenartig angeordnete Kapseln aufnehmbar sind, die in ihm, vorzugsweise mit Hohlnadeln, öffenbar sind und in welchem vorzugsweise jeweils der Inhalt einer Kapsel mit einer anderen Substanz, insbesondere einem Lösungsmittel, mischbar ist. Das Mischen kann beispielsweise durch Zugeben von Lösungsmittel in die Kapsel, Aufsaugen von Substanz und Lösungsmittel aus der Kapsel und wieder Zugeben des Aufgesaugten in die Kapsel erfolgen. Alternativ kann mit der Hohlnadel auch Substanz aus der Kapsel gesogen und an einem anderen Ort wieder abgegeben werden. Auch der Matrizenkapselhandlingkopf ermöglicht das Handling von Substanzen in Kapseln und das Vorbereiten von chemischen Reaktionen, wobei eine Vielzahl von matrizenartig angeordneten Kapseln gleichzeitig aufgenommen und bearbeitet werden können.

Bei einer anderen bevorzugten Ausführungsvariante ist eines der Werkzeuge ein Kapselabgabekopf, in dem eine Vielzahl von Kapseln gespeichert sind, die einzeln, gemeinsam oder gruppenweise abgebbar sind, wobei vorzugsweise die Kapseln im Kapselabgabekopf öffenbar sind und noch bevorzugter deren Inhalt im Kapselabgabekopf mit einer anderen Substanz, insbesondere einem Lösungsmittel, mischbar ist. Dank dem erfindungsgemässen Kapselabgabekopf können chemische Reaktionen ausserhalb eines Reaktionsgefässes weitgehend vorbereitet werden und zu deren Durchführung einfach die geeigneten Kapseln bzw. deren Inhalt in das Reaktionsgefäss gegeben werden.

Vorteilhafterweise ist eines der Werkzeuge ein Nadelkopf mit einer Hohlnadel, ein Mehrnadelkopf mit mehreren Hohlnadeln, die vorzugsweise einzeln in z-Richtung verstellbar sind und/oder deren gegenseitiger Abstand vorzugsweise verstellbar ist, ein Greifer, ein Deckelöffner oder ein Feststoffdosierkopf. Derartige Werkzeuge sind jeweils für sich alleine schon bekannt und erhöhen die Einsatzmöglichkeiten der erfindungsgemässen Vorrichtung zusätzlich.

Mit Vorteil ist eines der Werkzeuge ein Kombinationskopf mit mindestens zwei gleichen oder unterschiedlichen Werkzeugteilen, wobei vorzugsweise einer der Werkzeugteile ein Nadelkopf, Mehrnadelkopf, Greifer, Deckelöffner, Kapseltransportkopf, Matrizenkapseltransportkopf, Kapselhandlingkopf, Matrizenkapselhandlingkopf, Kapselabgabekopf, Schneckendosierkopf oder Feststoffdosierkopf ist. Dies ermöglicht die Durchführung von mehreren Verfahrensschritten nacheinander oder gleichzeitig mit einem einzigen Werkzeug.

Bei einem bevorzugten Ausführungsbeispiel ist am Werkzeug oder am Werkzeughalter eine Waage angeordnet, mit welcher vom Werkzeug aufgenommene oder abgegebene Substanz oder Kapseln wägbar ist bzw. sind.

Dadurch, dass direkt am Werkzeug oder am Werkzeughalter eine Waage angeordnet ist, kann ein Wägen einer aufgenommenen oder abgegebenen Substanz, einer Substanzkapsel oder eines sonstigen Gegenstands erfolgen, ohne dass dazu die Substanz, die Substanzkapsel oder der sonstige Gegenstand bzw. das Werkzeug auf eine separate Waage aufgesetzt zu werden braucht. Durch das Wägen vor Ort muss das Wägegut nicht deplaziert werden, ohne dass es notwendig ist, an jeder Arbeitsstelle, z.B. unter jedem Reaktionsgefäss, eine Waage anzuordnen. Das Wägen wird somit wesentlich vereinfacht.

Ein Verfahren zum Abwägen einer gewünschten Menge an Substanz mit einer Vorrichtung mit einem Werkzeughalter, der in einer x-Richtung und einer dazu senkrechten z-Richtung verstellbar ist, einem am Werkzeughalter befestigten Werkzeug in Form eines Dosierkopfs, und einer am Werkzeug oder am Werkzeughalter angeordneten Waage, mit welcher vom Werkzeug aufgenommene Substanz wägbar ist, ist durch die Schritte gekennzeichnet, dass
a) mit dem Werkzeug Substanz aufgenommen wird;
b) die Substanz gewogen wird;
c) die Differenz des dabei erhaltenen Wägewerts zum gewünschten Sollwert berechnet wird; und
d) bei einer ausserhalb des Rahmens einer gewünschten Genauigkeit liegenden Differenz mit dem Werkzeug abhängig von dieser Differenz Substanz abgegeben oder zusätzliche Substanz aufgenommen wird;
wobei die Schritte b) bis d) wiederholt werden, bis die Differenz im Rahmen einer gewünschten Genauigkeit gleich null ist.

Ein ähnliches Verfahren zur Auswahl einer Kapsel mit einer gewünschten Menge an Substanz mit einer Vorrichtung mit einem Werkzeughalter, der in einer x-Richtung und einer dazu senkrechten z-Richtung verstellbar ist, einem am Werkzeughalter befestigten Werkzeug in Form eines Dosierkopfs, und einer am Werkzeug oder am Werkzeughalter angeordneten Waage, mit welcher vom Werkzeug aufgenommene Kapseln wägbar sind, ist durch die Schritte gekennzeichnet, dass
a) mit dem Werkzeug eine Kapsel mit Substanz aufgenommen wird;
b) die Kapsel mit Substanz gewogen wird;
c) die Differenz des dabei erhaltenen Wägewerts zum gewünschten Sollwert berechnet wird; und
d) bei einer ausserhalb des Rahmens einer gewünschten Genauigkeit liegenden Differenz die Kapsel vom Werkzeug wieder abgegeben und eine neue Kapsel mit Substanz aufgenommen wird;
wobei die Schritte b) bis d) wiederholt werden, bis die Differenz im Rahmen einer gewünschten Genauigkeit gleich null ist.

Diese beiden nach dem Versuchsprinzip arbeitenden Wägeverfahren ermöglichen auf einfache Weise ein Abwägen einer gewünschten Substanzmenge oder eines gewünschten Gegenstands mit der gewünschten Genauigkeit.

Mit Vorteil weist die erfindungsgemässe Vorrichtung eine, vorzugsweise am Werkzeughalter angebrachte, Kamera auf, mit welcher ein Bereich unterhalb des Werkzeughalters filmbar ist, sowie einen Steuercomputer mit einer Bildverarbeitungseinheit, die die von der Kamera gefilmten Bilder auswertet, wobei vorzugsweise aufgrund des Auswerteresultats die Verstellung des Werkzeughalters und die Auswahl, Befestigung oder Loslösung eines der Werkzeuge steuerbar ist.

Bei einer vorteilhaften Alternativvariante umfasst die erfindungsgemässe Vorrichtung ein, vorzugsweise am Werkzeughalter angebrachtes, Infrarotanalysegerät mit einem Infrarotsender, mit welchem Infrarotwellen in einen Bereich unterhalb des Werkzeughalters strahlbar sind, und einem Infrarotsensor, mit welchem reflektierte Infrarotwellen messbar sind, sowie einen Steuercomputer mit einer Messwertverarbeitungseinheit, die die vom Infrarotsensor gemessenen reflektierten Infrarotwellen auswertet, wobei vorzugsweise aufgrund des Auswerteresultats die Verstellung des Werkzeughalters und die Auswahl, Befestigung oder Loslösung eines der Werkzeuge steuerbar ist. Das genaue Funktionsprinzip eines solchen Infrarotanalysegeräts ist beispielsweise in der US-A-6 031 233 beschrieben, die hiermit explizit in die vorliegende Beschreibung einbezogen wird.

Die Kamera bzw. das Infrarotanalysegerät ermöglicht zusammen mit dem Steuercomputer ein vollständig automatisches Arbeiten der Vorrichtung, ohne dass eine Bedienperson die handzuhabende Substanz bzw. Kapsel einzuschätzen und danach die Verstellung des Werkzeughalters und/oder die Auswahl, Befestigung oder Loslösung eines der Werkzeuge aktiv zu steuern hat.

Weitere vorteilhafte Werkzeuge umfassen beispielsweise einen Sensor, z.B. eine pH-Sonde, einen Strichcodeleser etc.

Bei einer vorteilhaften Ausführungsvariante umfasst die erfindungsgemässe Vorrichtung einen weiteren Werkzeughalter zur Befestigung eines weiteren Werkzeugs, der in einer x-Richtung und einer dazu senkrechten z-Richtung verstellbar ist, wobei er vorzugsweise zusätzlich um die z-Richtung drehbar und/oder in einer zu der x-Richtung und der z-Richtung senkrechten y-Richtung verstellbar ist. Der zweite Werkzeughalter kann wie der erste ausgebildet und gesteuert sein. Mit zwei oder allenfalls noch mehr Werkzeughaltern mit daran befestigten Werkzeugen kann die Geschwindigkeit der Vorrichtung multipliziert werden, wobei bei der Steuerung darauf geachtet werden muss, dass sich die verschiedenen Werkzeughalter und Werkzeuge nicht gegenseitig behindern.

Im folgenden werden die erfindungsgemässen Vorrichtungen unter Bezugnahme auf die beigefügten Zeichnungen und anhand von Ausführungsbeispielen detaillierter beschrieben. Es zeigen:

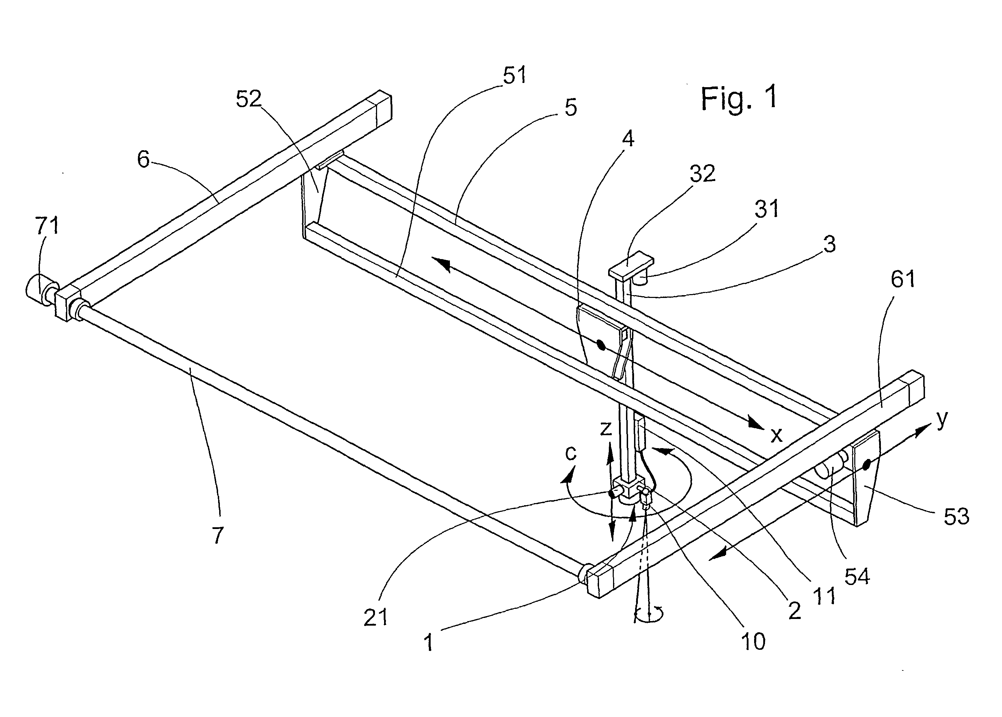

- Fig. 1 -: einen an einem Linearachsensystem in allen drei Raumrichtungen x, y und z verstellbar und um die z-Richtung drehbar angeordneten Werkzeughalter;
- Fig. 2 -: den Werkzeughalter von Fig. 1 mit einem Nadelkopf mit einer Hohlnadel als Werkzeug;

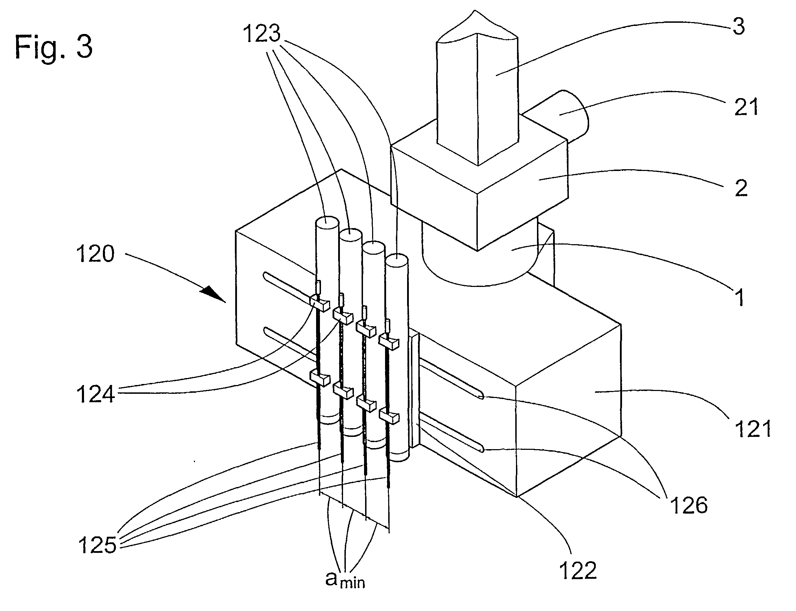

- Fig. 3 -: den Werkzeughalter von Fig. 1 mit einem Nadelkopf mit vier zueinander verstellbaren Hohlnadeln als Werkzeug, wobei die vier Hohlnadeln minimal beabstandet sind;

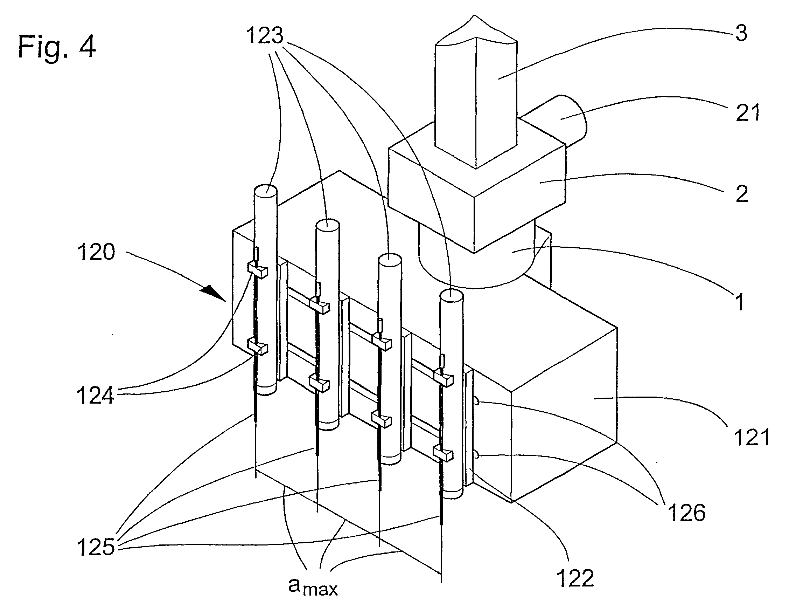

- Fig. 4 -: den Werkzeughalter mit Nadelkopf von Fig. 3, wobei die vier Hohlnadeln maximal beabstandet sind;
- Fig. 5 -: den Werkzeughalter von Fig. 1 mit einem Kapseltransportkopf als Werkzeug;
- Fig. 6 -: den Kapseltransportkopf von Fig. 5 beim Halten einer Kapsel;
- Fig. 7 -: den Kapseltransportkopf von Fig. 5 beim Plazieren einer Kapsel in einem in einer Matrize angeordneten Reaktionsgefäss;

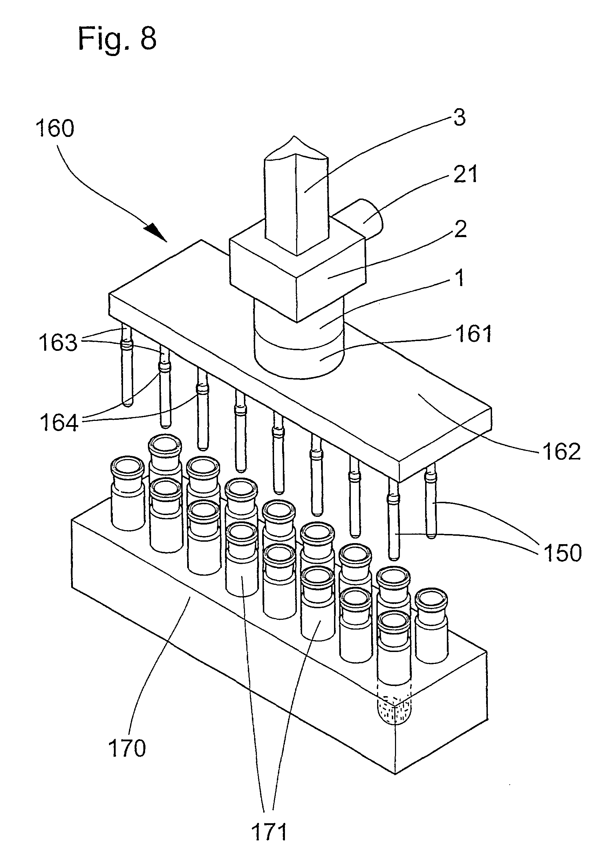

- Fig. 8 -: den Werkzeughalter von Fig. 1 mit einem Matrizenkapseltransportkopf als Werkzeug;

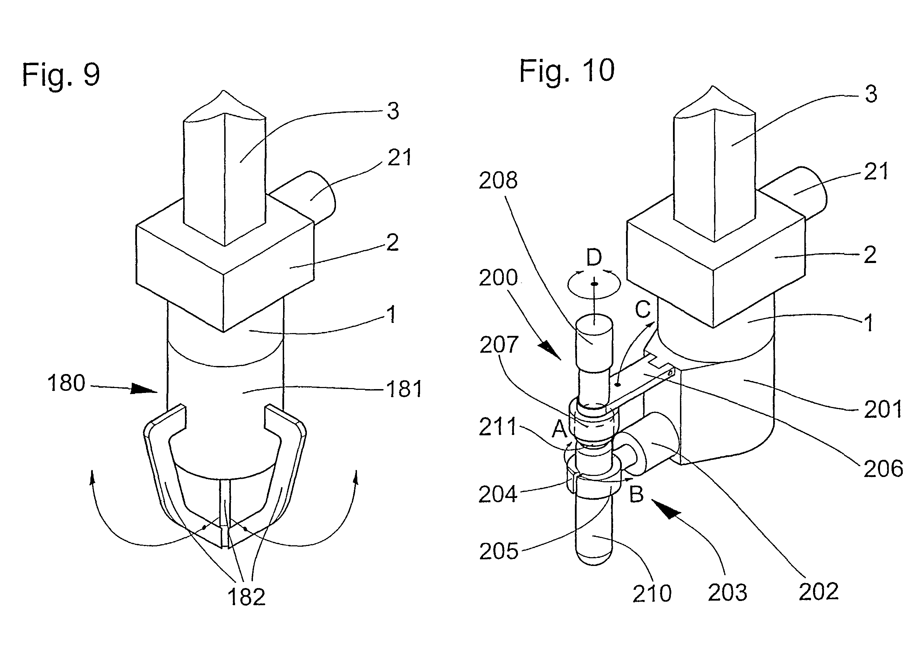

- Fig. 9 -: den Werkzeughalter von Fig. 1 mit einem Greifer als Werkzeug;
- Fig. 10 -: den Werkzeughalter von Fig. 1 mit einem Deckelöffner als Werkzeug;
- Fig. 11 -: eine Schnittansicht eines Werkzeugs in Form eines Kapselhandlingkopfs mit Hohlnadel;
- Fig. 12 -: den Kapselhandlingkopf von Fig. 11 am Werkzeughalter von Fig. 1 mit einer aufgenommenen, geschlossenen Kapsel;
- Fig. 13 -: den Kapselhandlingkopf mit aufgenommener Kapsel gemäss Fig. 12 beim Zugeben von Lösungsmittel nach dem Durchstechen der Kapsel mit der Hohlnadel;
- Fig. 14 -: den Kapselhandlingkopf mit durchstochener Kapsel gemäss Fig. 13 beim Abgeben der Kapsel mit nun gelöster Substanz;

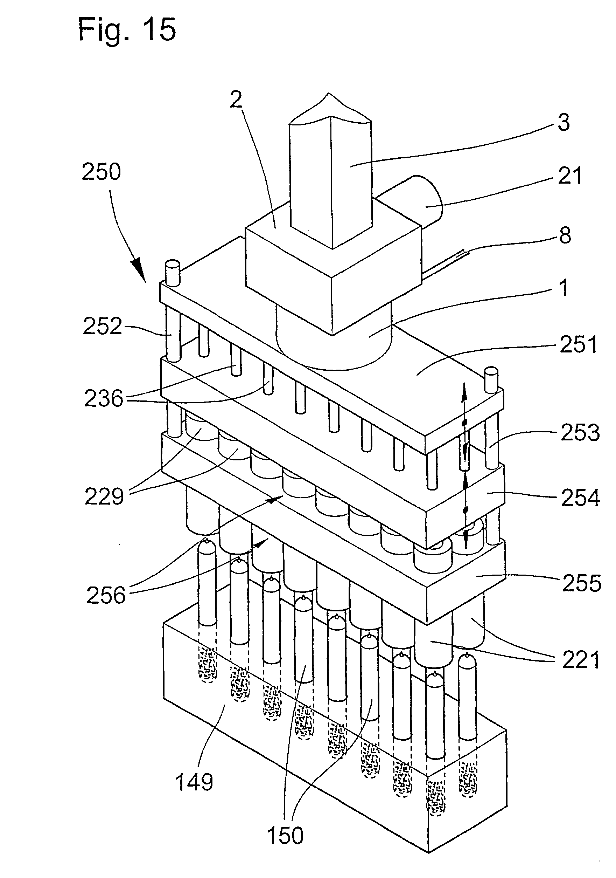

- Fig. 15 -: den Werkzeughalter von Fig. 1 mit einem schematisch dargestellten Matrizenkapselhandlingkopf als Werkzeug und in einer Matrize angeordneten Kapseln;

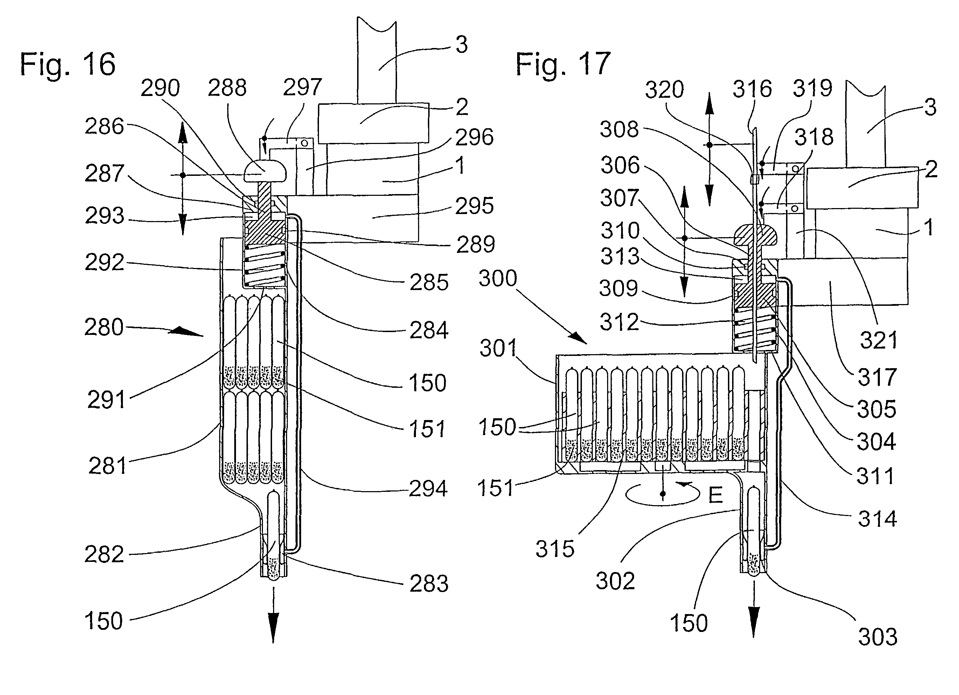

- Fig. 16 -: eine Schnittansicht eines Werkzeugs in Form eines ersten Ausführungsbeispiels eines Kapselabgabekopfs mit einer Vielzahl von gespeicherten Kapseln am Werkzeughalter von Fig. 1;
- Fig. 17 -: eine Schnittansicht eines Werkzeugs in Form eines zweiten Ausführungsbeispiels eines Kapselabgabekopfs mit einer Vielzahl von gespeicherten Kapseln, die im Kapselabgabekopf öffenbar sind, am Werkzeughalter von Fig. 1;
- Fig. 18 -: den Werkzeughalter von Fig. 1 mit einem Schneckendosierkopf als Werkzeug mit einer weggeschwenkten Blende in einer teilweise geschnittenen Ansicht;
- Fig. 19 -: den Werkzeughalter mit Schneckendosierkopf von Fig. 18 mit unter die Schnecke geschwenkter Blende in einer teilweise geschnittenen Ansicht; und

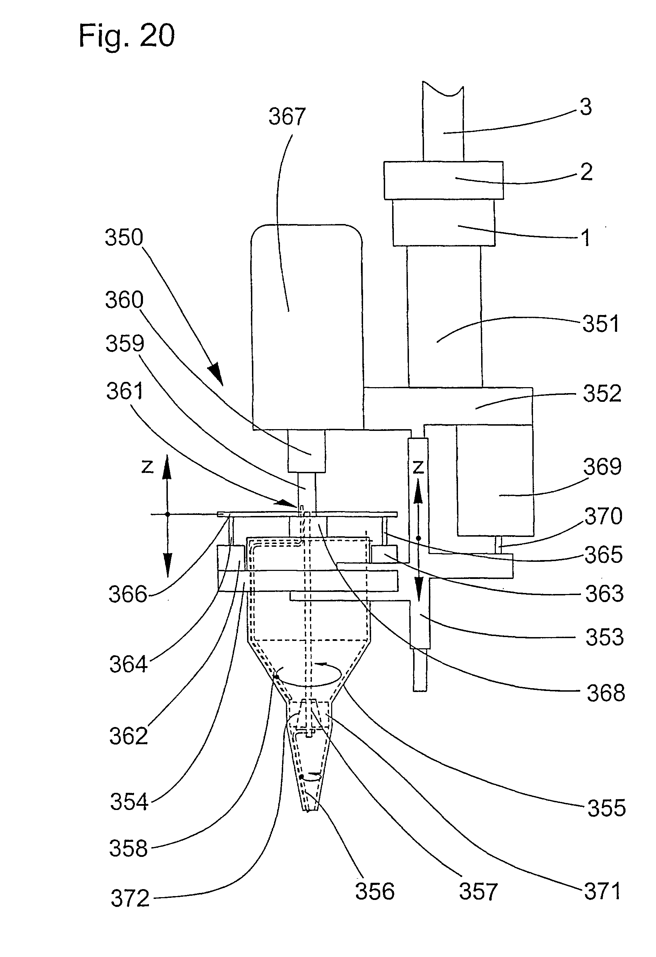

- Fig. 20 -: den Werkzeughalter von Fig. 1 mit einem Feststoffdosierkopf als Werkzeug.

### Figur 1

Ein Linearachsensystem zur Aufhängung und Verstellung eines Werkzeughalters 1 umfasst zwei parallel in y-Richtung verlaufende Führungsschienen 6, 61, die in nicht dargestellter Weise ortsfest verankert sind. Die einen Enden der beiden Führungsschienen 6, 61 sind durch eine Drehstange 7 verbunden, die mittels eines Schrittmotors 71 drehbar ist. An den beiden Führungsschienen 6, 61 ist eine obere Laufschiene 5 in y-Richtung verschiebbar befestigt. Die obere Laufschiene 5 ist über zwei Endplatten 52, 53 fest mit einer unteren Laufschiene 51 verbunden. Durch Drehen der Drehstange 7 mittels des Schrittmotors 71 wird im Innern der Führungsschienen 6, 61 jeweils ein Zahnriemen angetrieben, der die Laufschienen 5, 51 in y-Richtung verstellt. Mit Verstellung in y-Richtung ist im vorliegenden Zusammenhang sowohl eine Verstellung in +y- als auch in -y-Richtung (Gegenrichtung) gemeint.

An den beiden Laufschienen 5, 51 ist ein Laufwagen 4 in x-Richtung verschiebbar befestigt. Mit Verschiebung in x-Richtung ist im vorliegenden Zusammenhang wiederum sowohl eine Verschiebung in +x- als auch in -x-Richtung (Gegenrichtung) gemeint. Der Antrieb des Laufwagens 4 erfolgt über einen in der hohlen oberen Laufschiene 5 angeordneten Zahnriemen durch einen Schrittmotor 54.

Am Laufwagen 4 ist eine Werkzeugstange 3 in z-Richtung verschiebbar befestigt. Mit Verschiebung in z-Richtung ist im vorliegenden Zusammenhang wiederum sowohl eine Verschiebung in +z- als auch in -z-Richtung (Gegenrichtung) gemeint. Zur Verstellung der Werkzeugstange 3 ist an dieser über eine Hohlplatte 32 ein Schrittmotor 31 und in der Hohlplatte 32 und der Werkzeugstange 3 ein Zahnriemen angebracht.

Am unteren Ende der Werkzeugstange 3 ist ein Drehantrieb 2 angeordnet, an dem der Werkzeughalter 1 befestigt ist. Mit Hilfe eines Drehmotors 21 ist der Werkzeughalter 1 in Richtung des Pfeils c beidseitig um die z-Richtung herum drehbar. Zur Befestigung und Loslösung eines Werkzeugs besteht der Werkzeughalter 1 im wesentlichen aus einem Permanentmagnet, in dem ein Elektromagnet angeordnet ist.

Am Werkzeughalter 1 ist eine in z-Richtung nach unten gerichtete Kamera 10 angebracht, mit welcher ein Bereich unterhalb des Werkzeughalters 1 filmbar ist. Die von der Kamera 10 gefilmten Bilder werden über eine Datenleitung einer Bildverarbeitungseinheit eines Steuercomputers 11 übermittelt, die diese auswertet. Aufgrund des Auswerteresultats kann dann vom Steuercomputer 11 die Verstellung des Werkzeughalters 1 in x-, y-, z- und c-Richtung durch die Motoren 54, 71, 31 bzw. 21 und die Auswahl, Befestigung oder Loslösung eines Werkzeugs gesteuert werden.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, oder umgekehrt, so wird auf deren Erläuterung in vorangehenden Figurenbeschreibungen Bezug genommen.

### Figur 2

Am Werkzeughalter 1 ist hier als Werkzeug ein Nadelkopf 100 mittels eines Permanentmagnets 101 abnehmbar befestigt. Der Permanentmagnet 101 des Nadelkopfs 100 und der Permanentmagnet des Werkzeughalters 1 ziehen sich gegenseitig an, so dass bei entferntem Nadelkopf 100 dieser durch Aufsetzen des Werkzeughalters 1 an letzterem befestigt werden kann, wobei dies automatisch erfolgen kann, d.h. der Nadelkopf 100 muss nicht von Hand am Werkzeughalter 1 angebracht werden. Das Lösen des Nadelkopfs 100 vom Werkzeughalter 1 erfolgt mittels des im Werkzeughalter 1 angeordneten, nicht sichtbaren Elektromagnets, der beim Erhalt eines Stromimpulses die Wirkung der gegenseitigen Anziehung des Permanentmagnets 101 des Nadelkopfs 100 und des Permanentmagnets des Werkzeughalters 1 aufhebt.

Am Permanentmagnet 101 ist über eine Platte 102 ein Linearantrieb 103 angebracht. Eine Hohlnadel 105 ist mittels zwei mit durchgehenden Aufnahmelöchern für die Hohlnadel 105 versehenen Halteteilen 104 am Aussenzylinder des Linearantriebs 103 befestigt. Mit Hilfe des Linearantriebs 103 ist die Hohlnadel 105 in z-Richtung verstellbar.

Eine derartige Hohlnadel 105 kann beispielsweise zum Zudosieren oder Entnehmen von flüssigen Substanzen in bzw. aus Reaktionsgefässen verwendet werden. Insbesondere kann hierzu am oberen Ende der Hohlnadel 105 eine Saug- und/oder Blaseinrichtung angeschlossen werden.

### Figuren 3 und 4

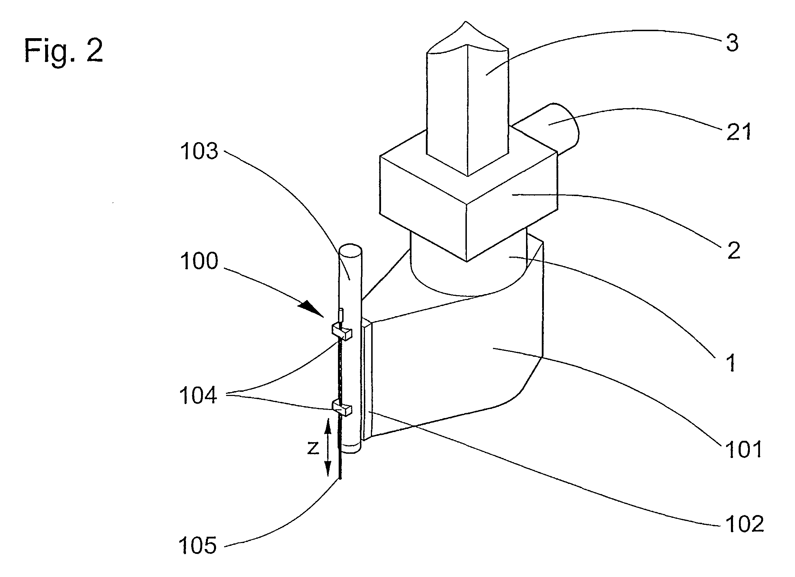

Das Werkzeug ist hier durch einen Nadelkopf 120 mit vier Hohlnadeln 125 gebildet, die einzeln in z-Richtung verstellbar sind und deren Abstand zueinander von einem minimalen Abstand aₘᵢₙ bis zu einem maximalen Abstand aₘₐₓ einstellbar ist, wobei der Abstand zweier benachbarter Hohlnadeln 125 jeweils gleich gross ist. Hierzu sind die Hohlnadeln 125 jeweils mittels zweier mit durchgehenden Hohlnadel-Aufnahmelöchern versehenen Halteteile 124 am Aussenzylinder eines Linearantriebs 123 befestigt. Die Linearantriebe 123, mit welchen die Hohlnadeln 125 einzeln in z-Richtung verstellbar sind, sind ihrerseits jeweils an einer zugehörigen Platte 122 angebracht. Die vier Platten 122 sind in zwei Nuten in einem Permanentmagnet 121 verschiebbar angeordnet, wobei der Antrieb hierfür über zwei durch einen Motor angetriebene Spindeln erfolgt, die sich innerhalb des Permanentmagnets 121 befinden. Über den Permanentmagnet 121 ist der Nadelkopf 120, wie im Zusammenhang mit Fig. 2 beschrieben, mit dem Werkzeughalter 1 verbunden. Das Lösen des Nadelkopfs 120 vom Werkzeughalter 1 erfolgt wiederum mittels des im Werkzeughalter 1 angeordneten, nicht sichtbaren Elektromagnets.

Mit einem derartigen Nadelkopf 120 können beispielsweise einem Reaktionsgefäss nacheinander verschiedene Flüssigkeiten zudosiert werden oder es kann gleichzeitig mehreren Reaktionsgefässen Flüssigkeit zudosiert bzw. aus ihnen entnommen werden. Insbesondere können hierzu am oberen Ende der Hohlnadeln 125 Saug- und/oder Blaseinrichtungen angeschlossen werden.

### Figuren 5 bis 7

Das Werkzeug ist hier durch einen Kapseltransportkopf 140 gebildet, mit welchem eine röhrchenförmige, dicht verschlossene Kapsel 150, die eine pulverförmige Substanz 151 enthält, durch Ansaugen aufnehmbar ist. Der Kapseltransportkopf 140 umfasst einen Permanentmagnet 141, über den er, wie entsprechend im Zusammenhang mit Fig. 2 beschrieben, mit dem Werkzeughalter 1 verbunden ist. Das Lösen erfolgt mittels des im Werkzeughalter 1 angeordneten Elektromagnets. Am Permanentmagnet 141 ist über ein Zwischenteil 142 ein Saugrohr 143 mit einem Kapselhalteendstück 144 angebracht. Mittels einer nicht dargestellten, herkömmlichen Saugeinrichtung kann im Saugrohr 143 ein Unterdruck erzeugt werden.

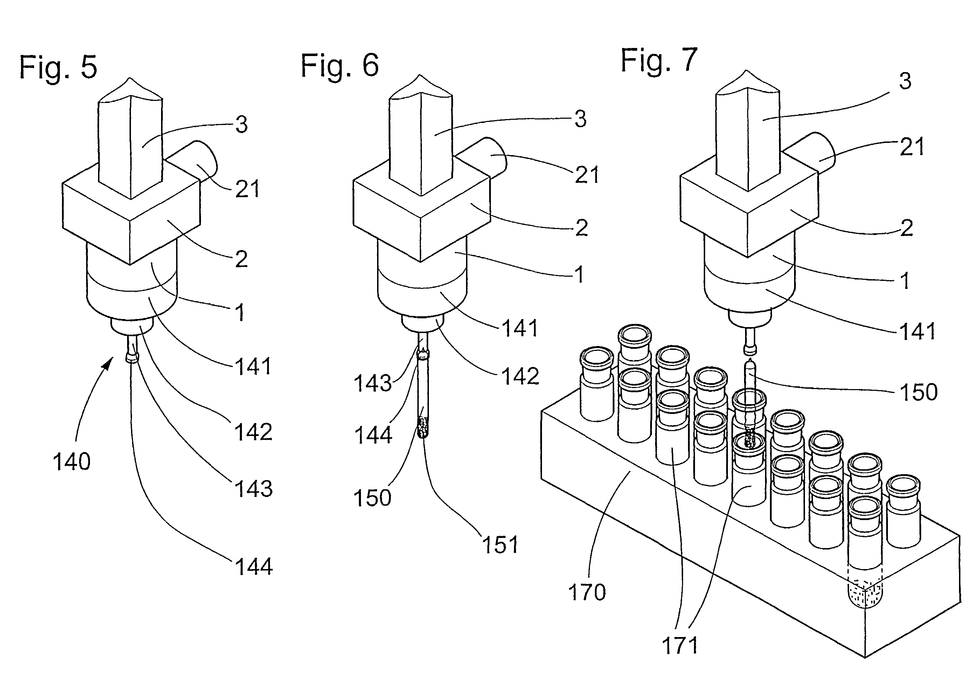

Zur Aufnahme einer Kapsel 150 wird der Kapseltransportkopf 140 mit dem Kapselhalteendstück 144 über das obere Ende der Kapsel 150 gefahren und dann die Kapsel 150 durch Erzeugen eines Unterdrucks im Saugrohr 143, wie in Fig. 6 dargestellt, ergriffen. Danach wird die Kapsel 150 durch das Linearachsensystem zum Bestimmungsort transportiert, in Fig. 7 einem in einer Matrize 170 angeordneten Reaktionsgefäss 171, und dort durch Aufheben des Unterdrucks im Saugrohr 143 in das Reaktionsgefäss 171 abgegeben.

### Figur 8

Das Werkzeug ist hier durch einen Matrizenkapseltransportkopf 160 gebildet, der einen Permanentmagnet 161 umfasst, über den er, wie entsprechend im Zusammenhang mit Fig. 2 beschrieben, mit dem Werkzeughalter 1 verbunden ist. Das Lösen erfolgt mittels des im Werkzeughalter 1 angeordneten Elektromagnets. Am Permanentmagnet 161 sind über eine Saugrohrplatte 162 sechzehn matrizenartig angeordnete Saugrohre 163 mit jeweils einem Kapselhalteendstück 164 angebracht. Mittels einer nicht dargestellten, herkömmlichen Saugeinrichtung kann in den Saugrohren 163 über die Saugrohrplatte 162 ein Unterdruck erzeugt werden.

Zur Aufnahme von Kapseln 150 wird der Matrizenkapseltransportkopf 160 mit den Kapselhalteendstücken 164 über die oberen Enden der Kapseln 150 gefahren und dann werden die Kapseln 150 durch Erzeugen eines Unterdrucks in den Saugrohren 163 ergriffen. Danach werden die Kapseln 150 durch das Linearachsensystem zum Bestimmungsort transportiert, hier in einer Matrize 170 angeordnete Reaktionsgefässe 171, und dort durch Aufheben des Unterdrucks in den Saugrohren 163 in die Reaktionsgefässe 171 abgegeben.

### Figur 9

Am Werkzeughalter 1 ist hier als Werkzeug ein Greifer 180 mittels eines Permanentmagnets 181 abnehmbar befestigt. Das Lösen des Greifers 180 vom Werkzeughalter 1 erfolgt wiederum mittels des im Werkzeughalter 1 angeordneten Elektromagnets. Der Greifer 180 umfasst drei Greiferarme 182, die in Richtung der eingezeichneten Pfeile vom Permanentmagnet 181 wegschwenkbar sind. Der Schwenkantrieb ist innerhalb des Permanentmagnets 181 angeordnet.

Ähnliche Greifer 180 dieser Art, die aber fest mit dem Werkzeughalter 1 verbunden sind, sind bereits aus dem Stand der Technik bekannt. Mit ihnen lassen sich beispielsweise Festkörper ergreifen und transportieren.

### Figur 10

Das Werkzeug ist hier durch einen Deckelöffner 200 gebildet, der einen Permanentmagnet 201 umfasst, über den er, wie entsprechend im Zusammenhang mit Fig. 2 beschrieben, mit dem Werkzeughalter 1 verbunden ist. Das Lösen des Deckelöffners 200 vom Werkzeughalter 1 erfolgt mittels des im Werkzeughalter 1 angeordneten Elektromagnets.

Am Permanentmagnet 201 ist einerseits ein Motor 202 befestigt, der computergesteuert eine Klammer 203 mit zwei Klemmzangenarmen 204 und 205 gemäss den Pfeilen A bzw. B öffnet und schliesst. Die Klammer 203 umgreift und hält ein mit einem Deckel 211 verschlossenes Eduktgefäss 210.

Anderereits ist am Permanentmagnet 201 eine gemäss Pfeil C aufklappare Lasche 206 angelenkt, an deren freiem Ende ein kappenartiges Deckelgreifelement 207 drehbar angebracht ist. Das Deckelgreifelement 207 umgibt den Deckel 211 des Eduktgefässes 210 und steht mit diesem in Reibverbindung. Als Alternative wäre auch eine formschlüssige Verbindung denkbar. Zum Drehen des Deckelgreifelements 207 gemäss Pfeil D ist an der Lasche 206 ein Drehmotor 208 angebracht. Durch Betätigen des Drehmotors 208 wird das Deckelgreifelement 207 gedreht und dreht seinerseits über die Reibverbindung den Deckel 211 mit, wodurch dieser vom Eduktgefäss 210 gelöst wird. Die Lasche 206 kann danach zusammen mit dem Deckelgreifelement 207 und dem Deckel 211 gemäss Pfeil C aufgeklappt werden.

### Figuren 11 bis 14

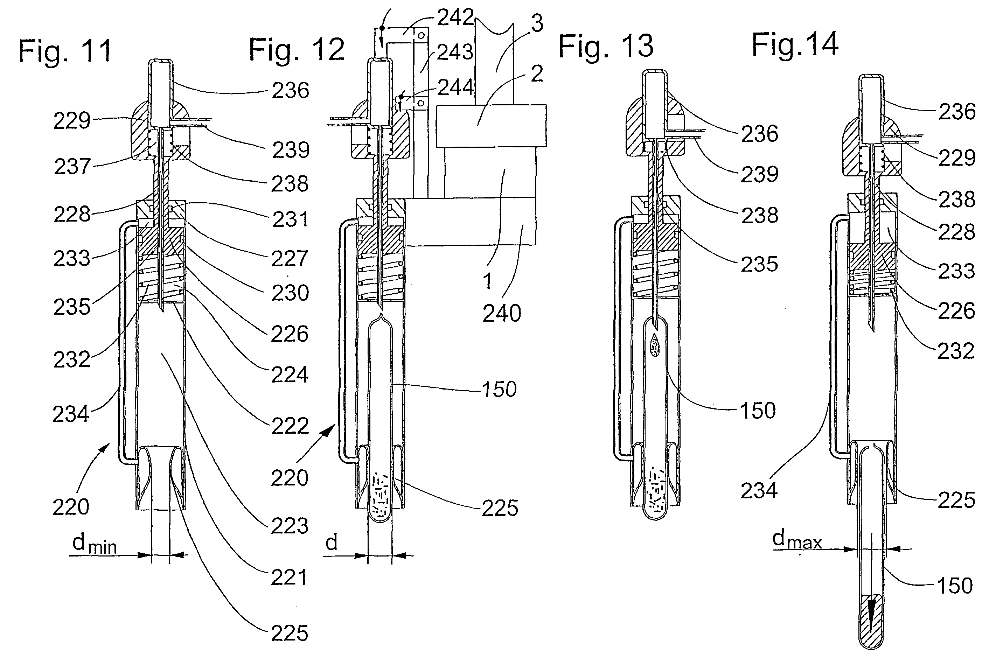

Das Werkzeug ist hier durch einen Kapselhandlingkopf 220 gebildet, der ein zylindrisches Gehäuse 221 umfasst, das durch eine Trennwand 222 in zwei Kompartimente 223 und 224 unterteilt und oben durch eine Endwand 227 verschlossen ist. Am offenen Ende des unteren Kompartiments 223 ist im zylindrischen Gehäuse 221 eine mit Luft gefüllte Manschette 225, beispielsweise aus Gummi, angeordnet, die im entlasteten Zustand gemäss Fig. 11 einen Innendurchmesser dₘᵢₙ aufweist. Im oberen Kompartiment 224 befindet sich ein Kolben 226, an welchem eine Kolbenstange 228 ansetzt, die durch die Endwand 227 hindurch nach aussen ragt und an ihrem oberen Ende mit einem äusseren Druckknopf 229 versehen ist.

Zwischen dem Kolben 226 und dem zylindrischen Gehäuse 221 und zwischen der Kolbenstange 228 und der Endwand 227 ist jeweils eine Ringdichtung 230, 231 angeordnet. Zwischen dem Kolben 226 und der Trennwand 222 befindet sich eine Spiralfeder 232, die in entspanntem Zustand den Kolben 226 in der Stellung gemäss Fig. 11 hält. Zwischen dem Kolben 226 und der Endwand 227 ist ein luftgefüllter Raum 233 vorhanden, der über eine Luftleitung 234 mit dem Innern der Manschette 225 kommuniziert.

Der Kapselhandlingkopf 220 umfasst ausserdem eine Hohlnadel 235, an der ein innerer Druckknopf 236 angebracht ist. Der innere Druckknopf 236 ist in einer Ausnehmung 237 im äusseren Druckknopf 229 verschiebbar gelagert, wobei in der Ausnehmung 237 unterhalb des inneren Druckknopfs 236 eine Spiralfeder 238 angeordnet ist, die in entspanntem Zustand den inneren Druckknopf 236 und die Hohlnadel 235 in der Stellung gemäss Fig. 11 hält. Die Hohlnadel 235 durchquert die Kolbenstange 228, den Kolben 226 und die Trennwand 222. Sie kommuniziert mit dem innen hohlen inneren Druckknopf 236, der über eine Zuleitung 239 beispielsweise mit einem Lösungsmittel oder einer anderen Flüssigkeit alimentierbar ist.

Fig. 12 zeigt den Kapselhandlingkopf 220 nach dem Aufnehmen einer Kapsel 150, welches durch Draufsetzen des Kapselhandlingkopfs 220 auf die Kapsel 150 erfolgen kann. Die Kapsel 150 wird durch die Manschette 225 gehalten, die jetzt einen Innendurchmesser d aufweist, der dem Aussendurchmesser der Kapsel 150 entspricht und der grösser ist als der Innendurchmesser dₘᵢₙ in entspanntem Zustand.

In Fig. 12 ist auch dargestellt, dass der Kapselhandlingkopf 220 einen Permanentmagnet 240 umfasst, über den er, wie entsprechend im Zusammenhang mit Fig. 2 beschrieben, mit dem Werkzeughalter 1 verbunden ist. Das Lösen des Kapselhandlingkopfs 220 vom Werkzeughalter 1 erfolgt mittels des im Werkzeughalter 1 angeordneten Elektromagnets. Ausserdem ist schematisch angedeutet, dass der innere Druckknopf 236 durch einen Drehhebel 242 und der äussere Druckknopf 229 durch einen Drehhebel 244 betätigbar sind, wobei die beiden Drehhebel 242, 244 an einer am Permanentmagnet 240 befestigten Stange 243 in Pfeilrichtung drehbar angelenkt sind. Die Antriebe der beiden Drehhebel 242, 244, die vom Steuercomputer gesteuert sind, sind nicht dargestellt. In den Fig. 11, 13 und 14 sind der Permanentmagnet 240, die beiden Drehhebel 242, 244, die Stange 243 und der Werkzeughalter 1 aus Übersichtlichkeitsgründen nicht gezeichnet.

Durch Hinunterdrücken des inneren Druckknopfs 236 wird die Spiralfeder 238 komprimiert und die Hohlnadel 235 in die Kapsel 150 gedrückt, wie in Fig. 13 dargestellt. Die Kapsel 150 wird dadurch geöffnet und es kann ihr über die Hohlnadel 235 eine Substanz aus dem inneren Druckknopf 236, der über die Zuleitung 239 alimentiert wird, zugeführt werden. Alternativ könnte die Zuleitung 239 auch direkt mit der Hohlnadel 235 verbunden sein. Die zugeführte Substanz, hier ein Lösungsmittel, kann beispielsweise durch Schütteln des Kapselhandlingkopfs 220 mit der bereits in der Kapsel 150 vorhandenen Substanz gemischt werden. Bei Verwendung einer genügend langen Hohlnadel könnte das Mischen auch durch mehrmaliges Aufsaugen und wieder Ablassen der in der Kapsel 150 vorhandenen Substanzen erfolgen.

Wird auf den inneren Druckknopf 236 kein Druck mehr ausgeübt, drückt ihn die Spiralfeder 238 wieder nach oben in die Ausgangsposition.

Zum Freigeben der Kapsel 150 wird, wie in Fig. 14 dargestellt, der äussere Druckknopf 229 nach unten gedrückt. Dabei werden die Kolbenstange 228 und der Kolben 226 unter Kompression der Spiralfeder 232 nach unten bewegt, wodurch der Raum 233 zwischen dem Kolben 226 und der Endwand 227 stark vergrössert wird und in ihm ein Unterdruck erzeugt wird. Dieser Unterdruck bewirkt, dass dem Innern der Manschette 225 über die Luftleitung 234 Luft entzogen wird, wodurch der Innendurchmesser der Manschette 225 auf einen maximalen Wert dₘₐₓ vergrössert wird, der grösser ist als der Aussendurchmesser der Kapsel 150, so dass die Kapsel 150 von der Manschette 225 nicht mehr gehalten wird und aufgrund der Schwerkraft nach unten fällt.

Wird auf den äusseren Druckknopf 229 kein Druck mehr ausgeübt, drückt ihn die Spiralfeder 232 wieder nach oben in die Ausgangsposition gemäss Fig. 11.

### Figur 15

Das Werkzeug ist hier durch einen Matrizenkapselhandlingkopf 250 gebildet, der eine Halteplatte 255 umfasst, die in nicht dargestellter Weise über einen Permanentmagnet mit dem Werkzeughalter 1 abnehmbar verbunden ist. Das Lösen des Matrizenkapselhandlingkopfs 250 vom Werkzeughalter 1 erfolgt mittels des im Werkzeughalter 1 angeordneten Elektromagnets, von dem die Stromleitung 8 sichtbar ist. Von zwei sich diagonal gegenüberliegenden Eckbereichen der Halteplatte 255 erstrecken sich zwei Stangen 252, 253, die fest mit der Halteplatte 255 verbunden sind, in z-Richtung, d.h. vertikal, nach oben. Oberhalb der Halteplatte 255 ist eine in z-Richtung verstellbare Freigabeplatte 254 angeordnet, die in zwei sich diagonal gegenüberliegenden Eckbereichen durch die Stangen 252, 253 geführt ist. Ebenfalls in z-Richtung verstellbar und durch die zwei Stangen 252, 253 geführt ist eine oberhalb der Freigabeplatte 254 befindliche Auslöseplatte 251. Die vertikale Verstellung der Freigabeplatte 254 und der Auslöseplatte 251 erfolgt durch zwei nicht dargestellte Motoren, könnte aber prinzipiell auch von Hand vorgenommen werden.

In der Halteplatte 255 sind sechzehn Kapselhandlingelemente 256 befestigt. Die hier nur schematisch dargestellten Kapselhandlingelemente 256 sind bis auf das Verbindungsteil 241 und den Permanentmagnet 240 im wesentlichen entsprechend den Kapselhandlingköpfen 220 der Fig. 11 bis 14 aufgebaut und umfassen jeweils neben einem zylindrischen Gehäuse 221 einen äusseren Druckknopf 229 und einen inneren Druckknopf 236. Die inneren Druckknöpfe 236 mit den daran angebrachten Hohlnadeln sind durch Absenken der Auslöseplatte 251 gemeinsam betätigbar. Die gemeinsame Betätigung der äusseren Druckknöpfe 229 erfolgt durch Absenken der Freigabeplatte 254. Mit dem Matrizenkapselhandlingkopf 250 können sechzehn in einer Matrize 149 angeordnete Kapseln 150 gemeinsam gefasst, jeweils mit einer Hohlnadel 235 geöffnet, eventuell die darin enthaltenen Substanzen mit anderen Substanzen gemischt und wieder freigegeben werden.

### Figur 16

Das Werkzeug ist hier ein erstes Ausführungsbeispiel eines Kapselabgabekopfs 280, der einen Permanentmagnet 295 umfasst, über den er, wie entsprechend im Zusammenhang mit Fig. 2 beschrieben, mit dem Werkzeughalter 1 verbunden ist. Das Lösen des Kapselabgabekopfs 280 vom Werkzeughalter 1 erfolgt mittels des im Werkzeughalter 1 angeordneten Elektromagnets.

Der Kapselabgabekopf 280 umfasst ein im wesentlichen zylindrisches Gehäuse 281, das sich in seinem unteren Teil zu einem Hals 282 verengt und in dem eine Vielzahl von jeweils eine Substanz 151 enthaltenden Kapseln 150 gespeichert sind. Eine der Kapseln 150 wird von einer im Hals 282 angeordneten, mit Luft gefüllten Manschette 283, beispielsweise aus Gummi, gehalten. In einem separaten Zylinder 284 befindet sich ein Kolben 285, an welchem eine Kolbenstange 286 ansetzt, die durch eine Endwand 287 des Zylinders 284 hindurch nach aussen ragt und an ihrem oberen Ende mit einem Druckknopf 288 versehen ist. Zwischen dem Kolben 285 und dem Zylinder 284 und zwischen der Kolbenstange 286 und der Endwand 287 ist jeweils eine Ringdichtung 289, 290 angeordnet. Zwischen dem Kolben 285 und dem Boden 291 des Zylinders 284 befindet sich eine Spiralfeder 292, die in entspanntem Zustand den Kolben 285 in der dargestellten Stellung hält. Zwischen dem Kolben 285 und der Endwand 287 ist ein luftgefüllter Raum 293 vorhanden, der über eine Luftleitung 294 mit dem Innern der Manschette 283 kommuniziert.

Zum Freigeben der von der Manschette 283 gehaltenen Kapsel 150 wird der Druckknopf 288 nach unten gedrückt. Dabei werden die Kolbenstange 286 und der Kolben 285 unter Kompression der Spiralfeder 292 nach unten bewegt, wodurch der Raum 293 zwischen dem Kolben 285 und der Endwand 287 stark vergrössert wird und in ihm ein Unterdruck erzeugt wird. Dieser Unterdruck bewirkt, dass dem Innern der Manschette 283 über die Luftleitung 294 Luft entzogen wird, wodurch der Innendurchmesser der Manschette 283 auf einen Wert vergrössert wird, der grösser ist als der Aussendurchmesser der Kapsel 150, so dass die Kapsel 150 von der Manschette 283 nicht mehr gehalten wird und aufgrund der Schwerkraft nach unten fällt. Gleichzeitig rückt eine zweite Kapsel 150 an die Stelle der ersten Kapsel 150 nach, wobei wichtig ist, dass der Druck auf den Druckknopf 288 rasch genug wieder gelöst wird, so dass zur Greifung der Kapsel 150 durch die Manschette 283 ausreichend schnell die Spiralfeder 292 den Kolben 285 wieder nach oben in die Ausgangsposition bewegt, der Raum 293 wieder verkleinert wird und der Manschette 283 über die Luftleitung 294 wieder Luft zugeführt wird.

Es ist ausserdem schematisch angedeutet, dass der Druckknopf 288 durch einen Drehhebel 297 betätigbar ist, wobei der Drehhebel 297 an einer am Permanentmagnet 295 befestigten Stange 296 in Pfeilrichtung drehbar angelenkt ist. Der Antrieb des Drehhebels 297, der vom Steuercomputer gesteuert ist, ist nicht dargestellt.

### Figur 17

Das Werkzeug ist hier ein zweites Ausführungsbeispiel eines Kapselabgabekopfs 300, der einen Permanentmagnet 317 umfasst, über den er, wie entsprechend im Zusammenhang mit Fig. 2 beschrieben, mit dem Werkzeughalter 1 verbunden ist. Das Lösen des Kapselabgabekopfs 300 vom Werkzeughalter 1 erfolgt mittels des im Werkzeughalter 1 angeordneten Elektromagnets.

Der Kapselabgabekopf 300 umfasst ein im wesentlichen zylindrisches Gehäuse 301, das sich in seinem unteren Teil zu einem Hals 302 verengt und in dem eine Vielzahl von jeweils eine Substanz 151 enthaltenden Kapseln 150 gespeichert sind. Eine der Kapseln 150 wird von einer im Hals 302 angeordneten, mit Luft gefüllten Manschette 303, beispielsweise aus Gummi, gehalten, während die anderen Kapseln 150 im zylindrischen Gehäuse 301 in einem gemäss Pfeil E revolverartig drehbaren Kammernteil 315 angeordnet sind. In einem separaten Zylinder 304 befindet sich ein Kolben 305, an welchem eine Kolbenstange 306 ansetzt, die durch eine Endwand 307 des Zylinders 304 hindurch nach aussen ragt und an ihrem oberen Ende mit einem Druckknopf 308 versehen ist. Zwischen dem Kolben 305 und dem Zylinder 304 und zwischen der Kolbenstange 306 und der Endwand 307 ist jeweils eine Ringdichtung 309, 310 angeordnet. Zwischen dem Kolben 305 und dem Boden 311 des Zylinders 304 befindet sich eine Spiralfeder 312, die in entspanntem Zustand den Kolben 305 in der dargestellten Stellung hält. Zwischen dem Kolben 305 und der Endwand 307 ist ein luftgefüllter Raum 313 vorhanden, der über eine Luftleitung 314 mit dem Innern der Manschette 303 kommuniziert.

Der Kapselabgabekopf 300 umfasst ausserdem eine Hohlnadel 316, die den Druckknopf 308, die Kolbenstange 306, den Kolben 305 und den Boden 311 durchquert. Durch Herunterdrücken der Hohlnadel 316 kann die Kapsel 150, die sich oberhalb derjenigen befindet, die von der Manschette 303 gehalten ist, aufgestochen werden. Über die Hohlnadel 316 kann der geöffneten Kapsel 150 bei Bedarf eine andere Substanz, insbesondere ein Lösungsmittel, zugeführt werden.

Zum Freigeben der von der Manschette 303 gehaltenen Kapsel 150 wird der Druckknopf 308 nach unten gedrückt. Dabei werden die Kolbenstange 306 und der Kolben 305 unter Kompression der Spiralfeder 312 nach unten bewegt, wodurch der Raum 313 zwischen dem Kolben 305 und der Endwand 307 stark vergrössert wird und in ihm ein Unterdruck erzeugt wird. Dieser Unterdruck bewirkt, dass dem Innern der Manschette 303 über die Luftleitung 314 Luft entzogen wird, wodurch der Innendurchmesser der Manschette 303 auf einen Wert vergrössert wird, der grösser ist als der Aussendurchmesser der Kapsel 150, so dass die Kapsel 150 von der Manschette 303 nicht mehr gehalten wird und aufgrund der Schwerkraft nach unten fällt. Gleichzeitig fällt die oberhalb dieser Kapsel 150 sich befindende Kapsel an die Stelle der freigegebenen Kapsel 150, wobei wichtig ist, dass der Druck auf den Druckknopf 308 rasch genug wieder gelöst wird, so dass zur Greifung der nachgerückten Kapsel 150 durch die Manschette 303 ausreichend schnell die Spiralfeder 312 den Kolben 305 wieder nach oben in die Ausgangsposition bewegt, der Raum 313 wieder verkleinert wird und der Manschette 303 über die Luftleitung 314 wieder Luft zugeführt wird. Danach wird das Kammernteil 315 einen Schritt weitergedreht, so dass eine neue Kapsel 150 in die Position direkt oberhalb des Halses 302 nachrückt. Das Drehen des Kammernteils 315 kann beispielsweise von Hand von aussen her erfolgen oder es kann durch die Betätigung des Druckknopfs 308 ausgelöst werden. Das zylindrische Gehäuse 301 weist zu diesem Zweck nötigenfalls Zugriffsöffnungen auf.

Es ist ausserdem schematisch angedeutet, dass die Hohlnadel 316 durch einen Drehhebel 319 und der Druckknopf 308 durch einen Drehhebel 318 betätigbar sind, wobei die beiden Drehhebel 318, 319 an einer am Permanentmagnet 317 befestigten Stange 321 in Pfeilrichtung drehbar angelenkt sind. Die Antriebe der beiden Drehhebel 318, 319, die vom Steuercomputer gesteuert sind, sind nicht dargestellt.

Anstelle des zylindrischen Gehäuses 301 und des revolverartig drehbaren Kammernteils 315 kann auch ein quaderförmiges Gehäuse vorgesehen sein, in dem die Kapseln 150 in einer in x- und y-Richtung verschiebbaren Platte angeordnet sind.

### Figuren 18 und 19

Das Werkzeug ist hier durch einen Schneckendosierkopf 320 gebildet, der einen Permanentmagnet 321 umfasst, über den er, wie entsprechend im Zusammenhang mit Fig. 2 beschrieben, mit dem Werkzeughalter 1 verbunden ist. Das Lösen des Schneckendosierkopfs 320 vom Werkzeughalter 1 erfolgt mittels des im Werkzeughalter 1 angeordneten Elektromagnets.

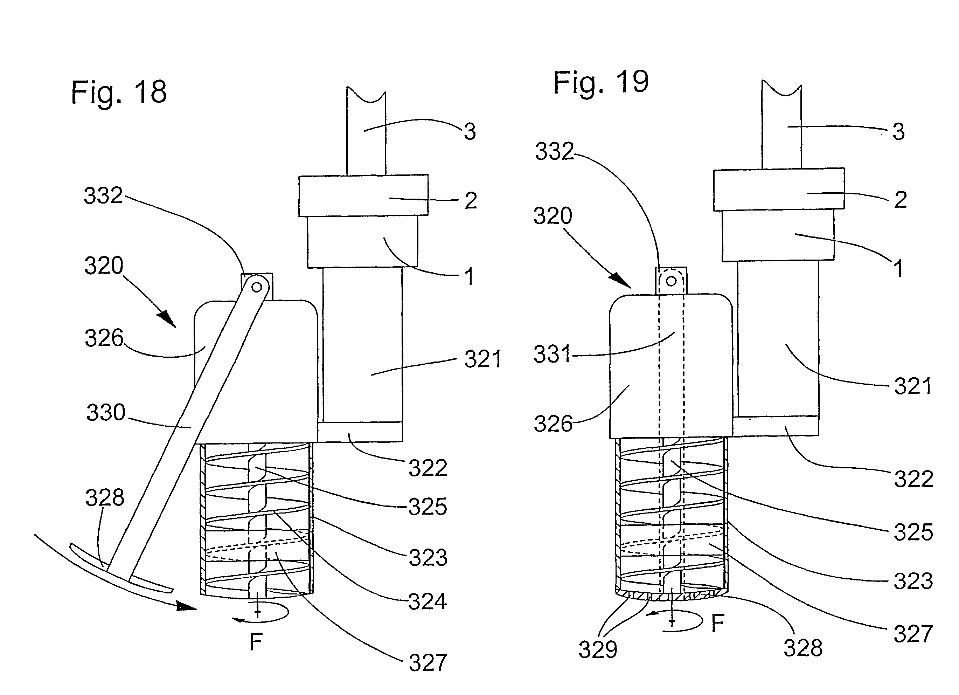

Am Permanentmagnet 321 ist über ein Verbindungsteil 322 ein Motorenteil 326 angebracht, an dessem unteren Ende ein offenes Rohr 323 befestigt ist, in dem eine gemäss Pfeil F um die z-Richtung vorwärts und rückwärts drehbare Schnecke 324 mit Schneckenwelle 325 gelagert ist. Die Schnecke 324 ist über die Schneckenwelle 325 durch einen im Motorenteil 326 angeordneten Motor drehbar und in z-Richtung stabil verankert. Durch Drehen der Schnecke 324 wird ein auf dieser laufender Stempel 327 hinauf- oder herabbewegt. Das untere, offene Ende des Rohrs 323 ist mit einer mit Löchern 329 versehenen Blende 328 verschliessbar, die an zwei Schwenkarmen 330, 331 befestigt ist, welche an einer Aufhängung 332 am Motorenteil 326 schwenkbar montiert sind. In Fig. 18 ist die Blende 328 vom offenen Ende des Rohrs 323 entfernt und kann durch ein Schwenken in Pfeilrichtung in die in Fig. 19 dargestellte Schliessposition gebracht werden.

Zur Aufnahme von Substanz wird das offene Ende des Rohrs 323 bei weggeschwenkter Blende 328 auf die Substanz gesetzt. Durch Drehen der Schnecke 324 in die den Stempel 327 hinaufbewegende Richtung wird Substanz direkt von der Schnecke 324 nach oben mitgenommen.

Zum Abgeben von Substanz wird die Blende 328 unter die Schnecke 324 vor das offene Ende des Rohrs 323 geschwenkt. Danach wird die Schnecke 324 in die den Stempel 327 herabbewegende Richtung gedreht, wodurch Substanz einerseits direkt durch die Schnecke 324 und anderseits durch den Stempel 327 nach unten durch die Löcher 329 der Blende 328 hindurch nach aussen gedrückt wird.

Die Blende 328 sorgt für eine kontinuierlichere Förderung von Substanz, prinzipiell ist eine Dosierung aber auch ohne Blende 328 möglich.

### Figur 20

Das Werkzeug ist hier durch einen Feststoffdosierkopf 350 gebildet, der einen Permanentmagnet 351 umfasst, über den er, wie entsprechend im Zusammenhang mit Fig. 2 beschrieben, mit dem Werkzeughalter 1 verbunden ist. Das Lösen des Feststoffdosierkopfs 350 vom Werkzeughalter 1 erfolgt mittels des im Werkzeughalter 1 angeordneten Elektromagnets.

Am Permanentmagnet 351 ist ein Lagerteil 352 angebracht, an dem ein Wagen 353 in z-Richtung verschiebbar gelagert ist. Seitlich in den Wagen 353 eingeschoben ist eine Halteplatte 354, an der ein Dosiergehäuse 355 befestigt ist, dessen Innendurchmesser nach unten abgestuft abnimmt und das einen Zwischenboden 371 mit einer konischen Dosieröffnung aufweist, die sich nach oben verjüngt. Die Halteplatte 354 mit dem Dosiergehäuse 355 kann durch eine Horizontalbewegung mit geringer Kraft vom Wagen 353 gelöst werden.

Mitten durch das Dosiergehäuse 355 und die konische Dosieröffnung im Zwischenboden 371 verläuft in z-Richtung eine rotierende Dosierwelle 357, die einen Abstreifer 356 antreibt und in z-Richtung verstellbar ist. Am unteren Ende der Dosierwelle 357 ist ein sich nach oben verjüngender Schliesskonus 372 angebracht, der die konische Dosieröffnung im Zwischenboden 371 je nach z-Position teilweise oder ganz verschliesst, wobei bei teilweise offener Dosieröffnung nach unten fliessende Substanz dem Abstreifer 356 zugeführt wird.

Die rotierende Dosierwelle 357 ist fest mit einem mitrotierenden Lagerteil-368 verbunden, ragt von unten in eine von einem Motor 360 angetriebene Welle 359 hinein und wird von dieser mitrotiert. Ein rotierender Abstreifer 358, der im oberen Teil des Dosiergehäuses 355 angeordnet ist, verläuft durch das Lagerteil 368 hindurch und ragt ebenfalls von unten in die Welle 359 hinein. Der Abstreifer 358 ist im Lagerteil 368 in z-Richtung beweglich und wird zusammen mit der Dosierwelle 357 von der Welle 359 angetrieben.

Die Verstellung der Dosierwelle 357 in z-Richtung wird durch zwei Elektromagnete 362 und 363 bewirkt, die auf der Halteplatte 354 montiert sind und über zwei Supportteile 364, 365 eine Deckplatte 366 tragen. Die Deckplatte 366 ist mit dem Lagerteil 368 in z-Richtung fest verbunden, wobei ein Kugellager 361 ermöglicht, dass das Lagerteil 368 an der drehfesten Deckplatte 366 rotiert. Die Elektromagnete 362, 363 erzeugen bei Aktivierung eine Kraft in z-Richtung und Heben oder Senken die Deckplatte 366 und in der Folge das Lagerteil 368 und die Dosierwelle 357.

Die Steuerung des Motors 360 und der Elektromagnete 362, 363 erfolgt durch ein Steuerungsteil 367, das seitlich am Lagerteil 352 angebracht ist und an dem der Motor 360 befestigt ist.

Ausserdem ist am Lagerteil 352 eine Waage 369 mit im Minimum einem Wägebereich von 0 bis 2 kg und vorzugsweise einer Genauigkeit von 0,1 g angebracht, die über einen Stift 370 mit dem Wagen 353 in Kontakt steht. Solche Waagen sind beispielsweise bei der Firma Sartorius AG, 37070 Göttingen, Deutschland, erhältlich.

Wird im Dosiergehäuse 355 gespeicherte Substanz über die konische Dosieröffnung im Zwischenboden 371 abgegeben, wird das auf den Wagen 353 lastende Gewicht verkleinert und der Wagen 353 weniger stark nach unten gezogen, was durch die Waage 369 über den Stift 370 gemessen wird.

Ein Feststoffdosierkopf dieser Art, aber ohne Magnetkupplung zum Werkzeughalter 1 und ohne direkt am Feststoffdosierkopf angeordneter Waage 369 wird von der Firma Auto Dose SA, CH-1228 Plan-les-Ouates, vertrieben.

Zu den vorbeschriebenen erfindungsgemässen Vorrichtungen sind weitere konstruktive Variationen realisierbar. Hier ausdrücklich erwähnt seien noch:
- Wie beim Feststoffdosierkopf 350 kann auch bei den anderen Werkzeugen eine Waage 369 vorgesehen sein. Es ist als Alternative auch denkbar, die Waage am Werkzeughalter 1 anzubringen.
- Die Verbindung zwischen Werkzeughalter 1 und Werkzeug kann auch anders als mit Magneten ausgebildet sein. Denkbar sind beispielsweise Schraubverbindungen, Bajonettverschlussverbindungen oder Klemmverbindungen. Die Verbindung sollte aber automatisch, d.h. nicht von Hand, herstellbar und wieder lösbar sein.
- Neben den beschriebenen Werkzeugen ist der Einsatz weiterer Werkzeuge möglich, die mit einer erfindungsgemässen Verbindungsstelle zum Werkzeughalter ausgestattet sind. Beispielsweise könnten auch die Kamera 10 oder das Infrarotanalysegerät als eigenständige Werkzeuge ausgebildet sein.

## Patentansprüche

1. Vorrichtung mit einem Werkzeughalter (1), der in einer x-Richtung und einer dazu senkrechten z-Richtung verstellbar ist, und einem am Werkzeughalter (1) abnehmbar befestigbaren ersten Werkzeug (100;120;140;160;220;250;280; 300;320;350) in Form eines Dosierkopfs, **dadurch gekennzeichnet, dass** sie mindestens ein weiteres, anderes Werkzeug (100;120;180;200;220;250;280;300;320;350) umfasst, das alternativ zum ersten Werkzeug am Werkzeughalter (1) abnehmbar befestigbar ist und das mindestens einen Motor (103;123;202,208;326;360) aufweist, wobei das Befestigen und Abnehmen jeweils eines der Werkzeuge automatisch durchführbar ist.

2. Vorrichtung nach Anspruch 1, **dadurch gekennzeichnet, dass** der Werkzeughalter (1) um die z-Richtung drehbar ist und vorzugsweise zusätzlich in einer zu der x-Richtung und der z-Richtung senkrechten y-Richtung verstellbar ist.

3. Vorrichtung nach Anspruch 1 oder 2, **dadurch gekennzeichnet, dass** die Befestigung der Werkzeuge am Werkzeughalter (1) mittels Magneten (101;121;;141;161;181;201; 321;351) erfolgt, wobei vorzugsweise von zwei sich gegenseitig anziehenden Permanentmagneten (101:121;;141;161;181; 201;321;351) der eine am Werkzeughalter (1) und der andere am Werkzeug angeordnet ist und die Wirkung der gegenseitigen Anziehung der beiden Permanentmagnete mittels mindestens eines Elektromagnets aufhebbar ist.

4. Vorrichtung nach Anspruch 1 oder 2, **dadurch gekennzeichnet, dass** die Befestigung der Werkzeuge am Werkzeughalter (1) durch Verschrauben, mittels eines Bajonettverschlusses oder mittels einer Klemmverbindung erfolgt.

5. Vorrichtung nach einem der Ansprüche 1 bis 4, **dadurch gekennzeichnet, dass** eines der Werkzeuge ein Schneckendosierkopf (320) ist, der eine in einem an seinem unteren Ende offenen Rohr (323) um die z-Richtung vorwärts und rückwärts drehbare Schnecke (324) umfasst, mit der Substanz aufnehmbar und abgebbar ist, wobei vorzugsweise das untere offene Ende des Rohres (323) mit einer mit Löchern (329) versehenen Blende (328) verschliessbar ist und vorzugsweise im Rohr (323) ein auf der Schnecke (324) laufender Stempel (327) angeordnet ist, der beim Abgeben von Substanz bei sich drehender Schnecke (324) Substanz durch die Blende (328) drückt.

6. Vorrichtung nach einem der Ansprüche 1 bis 5, **dadurch gekennzeichnet, dass** eines der Werkzeuge ein Kapseltransportkopf (140) ist, mit welchem eine Kapsel (150), vorzugsweise durch Ansaugen, aufnehmbar und abgebbar ist.

7. Vorrichtung nach einem der Ansprüche 1 bis 6, **dadurch gekennzeichnet, dass** eines der Werkzeuge ein Matrizenkapseltransportkopf (160) ist, mit welchem matrizenartig angeordnete Kapseln (150), vorzugsweise durch Ansaugen, aufnehmbar und die Kapseln (150) einzeln, gemeinsam oder gruppenweise abgebbar sind.

8. Vorrichtung nach einem der Ansprüche 1 bis 7, **dadurch gekennzeichnet, dass** eines der Werkzeuge ein Kapselhandlingkopf (220) ist, mit welchem mindestens eine Kapsel (150) aufnehmbar ist, die in ihm, vorzugsweise mit einer Hohlnadel (235), öffenbar ist und in welchem vorzugsweise der Inhalt der Kapsel (150) mit einer anderen Substanz, insbesondere einem Lösungsmittel, mischbar ist.

9. Vorrichtung nach einem der Ansprüche 1 bis 8, **dadurch gekennzeichnet, dass** eines der Werkzeuge ein Matrizenkapselhandlingkopf (250) ist, mit welchem mehrere matrizenartig angeordnete Kapseln (150) aufnehmbar sind, die in ihm, vorzugsweise mit Hohlnadeln (235), öffenbar sind und in welchem vorzugsweise jeweils der Inhalt einer Kapsel (150) mit einer anderen Substanz, insbesondere einem Lösungsmittel, mischbar ist.

10. Vorrichtung nach einem der Ansprüche 1 bis 9, **dadurch gekennzeichnet, dass** eines der Werkzeuge ein Kapselabgabekopf (280;300) ist, in dem eine Vielzahl von Kapseln (150) gespeichert sind, die einzeln, gemeinsam oder gruppenweise abgebbar sind, wobei vorzugsweise die Kapseln (150) im Kapselabgabekopf (300) öffenbar sind und noch bevorzugter deren Inhalt im Kapselabgabekopf (300) mit einer anderen Substanz, insbesondere einem Lösungsmittel, mischbar ist.

11. Vorrichtung nach einem der Ansprüche 1 bis 10, **dadurch gekennzeichnet, dass** eines der Werkzeuge ein Nadelkopf (100) mit einer Hohlnadel (105), ein Mehrnadelkopf (120) mit mehreren Hohlnadeln (125), die vorzugsweise einzeln in z-Richtung verstellbar sind und/oder deren gegenseitiger Abstand vorzugsweise verstellbar ist, ein Greifer (180), ein Deckelöffner (200) oder ein Feststoffdosierkopf (350) ist.

12. Vorrichtung nach einem der Ansprüche 1 bis 11, **dadurch gekennzeichnet, dass** eines der Werkzeuge ein Kombinationskopf mit mindestens zwei gleichen oder unterschiedlichen Werkzeugteilen ist, wobei vorzugsweise einer der Werkzeugteile ein Nadelkopf (100), Mehrnadelkopf (120), Greifer (180), Deckelöffner (200), Kapseltransportkopf (140), Matrizenkapseltransportkopf (160), Kapselhandlingkopf (220), Matrizenkapselhandlingkopf (250), Kapselabgabekopf (280;300), Schneckendosierkopf (320) oder Feststoffdosierkopf (350) ist.

13. Vorrichtung nach einem der Ansprüche 1 bis 12, **dadurch gekennzeichnet, dass** am Werkzeug (100;120;140;160; 180;200;220;250;280;300;320;350) oder am Werkzeughalter (1) eine Waage (369) angeordnet ist, mit welcher vom Werkzeug aufgenommene oder abgegebene Substanz oder Kapseln (150) wägbar ist bzw. sind.

14. Vorrichtung nach einem der Ansprüche 1 bis 13, **dadurch gekennzeichnet, dass** sie eine, vorzugsweise am Werkzeughalter (1) angebrachte, Kamera (10) aufweist, mit welcher ein Bereich unterhalb des Werkzeughalters (1) filmbar ist, sowie einen Steuercomputer (11) mit einer Bildverarbeitungseinheit, die die von der Kamera (10) gefilmten Bilder auswertet, wobei vorzugsweise aufgrund des Auswerteresultats die Verstellung des Werkzeughalters (1) und die Auswahl, Befestigung oder Loslösung eines der Werkzeuge (100;120;140;160;180;200;220;250;280;300;320;350) steuerbar ist.

15. Vorrichtung nach einem der Ansprüche 1 bis 14, **dadurch gekennzeichnet, dass** sie ein, vorzugsweise am Werkzeughalter (1) angebrachtes, Infrarotanalysegerät mit einem Infrarotsender, mit welchem Infrarotwellen in einen Bereich unterhalb des Werkzeughalters (1) strahlbar sind, und einem Infrarotsensor, mit welchem reflektierte Infrarotwellen messbar sind, aufweist, sowie einen Steuercomputer (11) mit einer Messwertverarbeitungseinheit, die die vom Infrarotsensor gemessenen reflektierten Infrarotwellen auswertet, wobei vorzugsweise aufgrund des Auswerteresultats die Verstellung des Werkzeughalters (1) und die Auswahl, Befestigung oder Loslösung eines der Werkzeuge (100;120;140;160; 180;200;220;250;280;300;320;350) steuerbar ist.

16. Vorrichtung nach einem der Ansprüche 1 bis 15, **dadurch gekennzeichnet, dass** sie einen weiteren Werkzeughalter zur Befestigung eines weiteren Werkzeugs (100;120; 140;160;180;200;220;250;280;300;320;350) umfasst, der in einer x-Richtung und einer dazu senkrechten z-Richtung verstellbar ist, wobei er vorzugsweise zusätzlich um die z-Richtung drehbar und/oder in einer zu der x-Richtung und der z-Richtung senkrechten y-Richtung verstellbar ist.

17. Vorrichtung nach einem der Ansprüche 1 bis 16, **dadurch gekennzeichnet, dass** der Dosierkopf (100;120;140; 160;220;250;280;300;320;350) einen Vorratsbehälter mit der zu dosierenden Substanz vollständig mit sich mitführt.

## Claims

1. A device having a tool holder (1), which can be displaced in an x direction and a z direction which is perpendicular to the x direction, and a first tool (100; 120; 140; 160; 220; 250; 280; 300; 320; 350) in the form of a metering head, which can be removably secured to the tool holder (1), **characterized in that** it comprises at least one further, other tool (100; 120; 180; 200; 220; 250; 280; 300; 320; 350), which can be removably secured to the tool holder (1) as an alternative to the first tool and which has at least one motor (103; 123; 202, 208; 326; 360), it being possible for the securing and removal of in each case one of the tools to be carried out automatically.

2. The device as claimed in claim 1, **characterized in that** the tool holder (1) can rotate about the z direction and can preferably also be displaced in a y direction which is perpendicular to the x direction and to the z direction.

3. The device as claimed in claim 1 or 2, **characterized in that** the tools are secured to the tool holder (1) by means of magnets (101; 121; 141; 161; 181; 201; 321; 351), in which case, preferably, of two permanent magnets (101; 121; 141; 161; 181; 201; 321; 351) which attract one another, one permanent magnet is arranged on the tool holder (1) and the other permanent magnet is arranged on the tool, and the effect of the attraction between the two permanent magnets can be cancelled out by means of at least one electromagnet.

4. The device as claimed in claim 1 or 2, **characterized in that** the tools are secured to the tool holder (1) by screw connection, by means of a bayonet catch or by means of a clamping connection.

5. The device as claimed in one of claims 1 to 4, **characterized in that** one of the tools is a screw metering head (320), which comprises a screw (324) which can rotate forward and backward about the z direction in a tube (323), which is open at its lower end, and which can be used to take up and dispense substance, it preferably being possible for the lower open end of the tube (323) to be closed off by a diaphragm (328) provided with holes (329) and a ram (327), which runs on the screw (324) and presses substance through the diaphragm (328) as the screw (324) rotates when substance is being dispensed, preferably being arranged in the tube (323).

6. The device as claimed in one of claims 1 to 5, **characterized in that** one of the tools is a capsule-transporting head (140), by means of which a capsule (150) can be picked up and released, preferably by suction.

7. The device as claimed in one of claims 1 to 6, **characterized in that** one of the tools is a matrix-capsule-transporting head (160), by means of which capsules (150) which are arranged in the manner of a matrix can be picked up, preferably by suction, and the capsules (150) can be released individually, together or in groups.

8. The device as claimed in one of claims 1 to 7, **characterized in that** one of the tools is a capsule-handling head (220), by means of which at least one capsule (150) can be picked up, which capsule can be opened in the tool, preferably by means of a hollow needle (235), and in which tool the contents of the capsule (150) can preferably be mixed with another substance, in particular a solvent.

9. The device as claimed in one of claims 1 to 8, **characterized in that** one of the tools is a matrix-capsule-handling head (250), by means of which a plurality of capsules (150) which are arranged in the form of a matrix can be picked up, which capsules can be opened in the tool, preferably using hollow needles (235), and in which tool the contents of one capsule (150) can preferably in each case be mixed with another substance, in particular a solvent.

10. The device as claimed in one of claims 1 to 9, **characterized in that** one of the tools is a capsule-dispensing head (280; 300), in which a multiplicity of capsules (150) are stored and can be dispensed individually, together or in groups, it preferably being possible for the capsules (150) to be opened in the capsule-dispensing head (300), and it even more preferably being possible for the contents of the capsules to be mixed with another substance, in particular a solvent, in the capsule-dispensing head (300).

11. The device as claimed in one of claims 1 to 10, **characterized in that** one of the tools is a needle head (100) with a hollow needle (105), a multi-needle head (120) with a plurality of hollow needles (125), which can preferably be displaced individually in the z direction and/or the distance between which can preferably be adjusted, a gripper (180), a lid opener (200) or a solids-metering head (350).

12. The device as claimed in one of claims 1 to 11, **characterized in that** one of the tools is a combination head having at least two identical or different tool parts, one of the tool parts preferably being a needle head (100), multi-needle head (120), gripper (180), lid opener (200), capsule-transporting head (140), matrix-capsule-transporting head (160), capsule-handling head (220), matrix-capsule-handling head (250), capsule-dispensing head (280; 300), screw metering head (320) or solids-metering head (350).

13. The device as claimed in one of claims 1 to 12, **characterized in that** a balance (369), which can be used to weigh substance or capsules (150) which has/have been taken up or dispensed by the tool, is arranged on the tool (100; 120; 140; 160; 180; 200; 220; 250; 280; 300; 320; 350) or on the tool holder (1).

14. The device as claimed in one of claims 1 to 13, **characterized in that** it has a camera (10), which is preferably arranged on the tool holder (1) and which can be used to film an area below the tool holder (1), as well as a control computer (11) having an image-processing unit, which evaluates images which have been filmed by the camera (10), it preferably being possible for the displacement of the tool holder (1) and the selection, securing or release of one of the tools (100; 120; 140; 160; 180; 200; 220; 250; 280; 300; 320; 350) to be controlled on the basis of the evaluation result.

15. The device as claimed in one of claims 1 to 14, **characterized in that** it has an infrared analysis unit, which is preferably arranged on the tool holder (1) and has an infrared transmitter, by means of which infrared waves can be radiated into an area below the tool holder (1), and an infrared sensor, which can be used to measure reflected infrared waves, as well as a control computer (11) having a measured-value-processing unit, which evaluates the reflected infrared waves measured by the infrared sensor, it preferably being possible for the displacement of the tool holder (1) and the selection, securing or release of one of the tools (100; 120; 140; 160; 180; 200; 220; 250; 280; 300; 320; 350) to be controlled on the basis of the evaluation result.

16. The device as claimed in one of claims 1 to 15, **characterized in that** it comprises a further tool holder for attachment of a further tool (100; 120; 140; 160; 180; 200; 220; 250; 280; 300; 320; 350) which can be displaced in an x direction and in a z direction which is perpendicular to the x direction, it preferably additionally being able to rotate about the z direction and/or to be displaced in a y direction which is perpendicular to the x direction and to the z direction.

17. The device as claimed in one of claims 1 to 16, **characterized in that** the metering head (100; 120; 140; 160; 220; 250; 280; 300; 320; 350) carries with it a storage container holding all the substance which is to be metered.

## Revendications

1. Dispositif comprenant un porte-outils (1), qui peut être ajusté dans une direction x et une direction z perpendiculaire à celle-ci, et un premier outil (100;120;140;160;220;250;280;300; 320;350) pouvant être fixé de manière amovible sur le porte-outils (1), en forme de tête de dosage, **caractérisé en ce qu'**il comprend au moins un autre outil supplémentaire (100;120;180;200; 220;250;280;300;320;350) qui peut être fixé de manière amovible sur le porte-outils (1) en alternative au premier outil et qui présente au moins un moteur (103;123;202;208;326;360), la fixation et l'enlèvement d'un des outils respectifs pouvant s'effectuer automatiquement.

2. Dispositif selon la revendication 1, **caractérisé en ce que** le porte-outils (1) peut tourner autour de la direction z et peut être ajusté de préférence en outre dans une direction y perpendiculaire à la direction x et à la direction z.

3. Dispositif selon la revendication 1 ou 2, **caractérisé en ce que** la fixation des outils sur le porte-outils (1) s'effectue au moyen d'aimants (101;121;141;161;181;201;321;351), où, de préférence, sur deux aimants permanents s'attirant mutuellement (101;121;141;161;181;201;321;351), l'un est disposé sur le porte-outils (1) et l'autre est disposé sur l'outil, et l'action de l'attraction mutuelle des deux aimants permanents peut être supprimée au moyen d'au moins un électroaimant.

4. Dispositif selon la revendication 1 ou 2, **caractérisé en ce que** la fixation des outils sur le porte-outils (1) s'effectue par vissage, au moyen d'un emboîtement à baïonnette, ou au moyen d'un raccord de serrage.

5. Dispositif selon l'une quelconque des revendications 1 à 4, **caractérisé en ce que** l'un des outils est une tête de dosage à vis sans fin (320) qui comprend une vis sans fin (324) pouvant tourner vers l'avant et vers l'arrière autour de la direction z dans un tube (323) ouvert au niveau de son extrémité inférieure, avec laquelle une substance peut être prélevée et distribuée, l'extrémité inférieure ouverte du tube (323) pouvant de préférence être fermée avec un obturateur (328) pourvu de trous (329) et un poinçon (327) s'étendant sur la vis sans fin (324) étant de préférence disposé dans le tube (323), lequel presse la substance à travers l'obturateur (328) lors de la distribution de substance au cours de la rotation de la vis sans fin (324).

6. Dispositif selon l'une quelconque des revendications 1 à 5, **caractérisé en ce que** l'un des outils est une tête de transport de capsules (140) avec laquelle une capsule (150) peut être prélevée, de préférence par aspiration, et distribuée.

7. Dispositif selon l'une quelconque des revendications 1 à 6, **caractérisé en ce que** l'un des outils est une tête de transport de capsules matricielle (160), avec laquelle des capsules (150) disposées suivant une matrice peuvent être prélevées de préférence par aspiration, et les capsules (150) peuvent être distribuées séparément, en commun ou en groupe.

8. Dispositif selon l'une quelconque des revendications 1 à 7, **caractérisé en ce que** l'un des outils est une tête de manipulation de capsules (220) avec laquelle au moins une capsule (150) peut être prélevée, laquelle peut être ouverte dans celle-ci, de préférence avec une aiguille creuse (235) et dans laquelle tête de manipulation de préférence le contenu de la capsule (150) peut être mélangé à une autre substance, notamment un solvant.

9. Dispositif selon l'une quelconque des revendications 1 à 8, **caractérisé en ce que** l'un des outils est une tête de manipulation de capsules matricielle (250), avec laquelle plusieurs capsules (150) disposées suivant une matrice peuvent être prélevées, lesquelles peuvent être ouvertes dans celle-ci, de préférence avec des aiguilles creuses (235), et dans laquelle tête de manipulation de préférence le contenu respectif d'une capsule (150) peut être mélangé à une autre substance, notamment un solvant.

10. Dispositif selon l'une quelconque des revendications 1 à 9, **caractérisé en ce que** l'un des outils est une tête de distribution de capsules (280;300) dans laquelle une pluralité de capsules (150) sont stockées et peuvent être distribuées séparément, en commun ou en groupe, les capsules (150) pouvant de préférence être ouvertes dans la tête de distribution de capsules (300) et leur contenu, de manière encore plus préférée, pouvant être mélangé dans la tête de distribution de capsules (300) à une autre substance, notamment un solvant.

11. Dispositif selon l'une quelconque des revendications 1 à 10, **caractérisé en ce que** l'un des outils est une tête à aiguille (100) avec une aiguille creuse (105), une tête à plusieurs aiguilles (120) avec plusieurs aiguilles creuses (125), qui peuvent être ajustées de préférence séparément dans la direction z et/ou dont la distance mutuelle est de préférence ajustable, un dispositif de préhension (180), un dispositif d'ouverture de couvercle (200) ou une tête de dosage de substances solides (350).

12. Dispositif selon l'une quelconque des revendications 1 à 11, **caractérisé en ce que** l'un des outils est une tête combinée avec au moins deux pièces d'outil identiques ou différentes, l'une des pièces d'outil étant de préférence une tête à aiguille (100), une tête à plusieurs aiguilles (120), un dispositif de préhension (180), un dispositif d'ouverture de couvercle (200), une tête de transport de capsules (140), une tête de transport de capsules matricielle (160), une tête de manipulation de capsules (220), une tête de manipulation de capsules matricielle (250), une tête de distribution de capsules (280;300), une tête de dosage à vis sans fin (320) ou une tête de dosage de substances solides (350).

13. Dispositif selon l'une quelconque des revendications 1 à 12, **caractérisé en ce que** l'on dispose sur l'outil (100;120;140;160;180;200;220; 250;280;300;320;350) ou sur le porte-outils (1) une balance (369) avec laquelle on peut peser une substance ou des capsules (150) prélevées ou distribuées par l'outil.

14. Dispositif selon l'une quelconque des revendications 1 à 13, **caractérisé en ce qu'**il présente une caméra (10) montée de préférence sur le porte-outils (1), avec laquelle une région en dessous du porte-outils (1) peut être filmée, ainsi qu'un ordinateur de commande (11) avec une unité de traitement d'image qui analyse les images filmées par la caméra (10), l'ajustement du porte-outils (1) et la sélection, la fixation ou le desserrage d'un des outils (100;120;140;160;180; 200;220;250;280;300;320;350) pouvant être commandés de préférence sur la base du résultat de l'analyse.

15. Dispositif selon l'une quelconque des revendications 1 à 14, **caractérisé en ce qu'**il présente un appareil d'analyse infrarouge avec un émetteur infrarouge monté de préférence sur le porte-outils (1), avec lequel des ondes infrarouges peuvent être diffusées dans une région en dessous du porte-outils (1), et un capteur infrarouge avec lequel des ondes infrarouges réfléchies peuvent être mesurées, ainsi qu'un ordinateur de commande (11) avec une unité de traitement de valeurs de mesure, qui analyse les ondes infrarouge réfléchies mesurées par le capteur infrarouge, l'ajustement du porte-outils (1) et la sélection, la fixation ou le desserrage d'un des outils (100;120;140;160;180;200;220;250; 280;300;320;350) pouvant être commandés de préférence sur la base du résultat de l'analyse.

16. Dispositif selon l'une quelconque des revendications 1 à 15, **caractérisé en ce qu'**il comprend un autre porte-outils pour la fixation d'un autre outil (100;120;140;160;180;200;220;250; 280;300;320;350) qui peut être ajusté dans une direction x et une direction z perpendiculaire à celle-ci, celui-ci pouvant de préférence tourner de plus autour de la direction z et/ou pouvant être ajusté dans une direction y perpendiculaire à la direction x et à la direction z.

17. Dispositif selon l'une quelconque des revendications 1 à 16, **caractérisé en ce que** la tête de dosage (100;120;140;160;220;250;280;300; 320;350) entraîne complètement avec elle un réservoir avec la substance à doser.
